(19) Europäisches Patentamt
European Patent Office
Office européen des brevets

(11) **EP 1 676 167 B1**

(12) **EUROPÄISCHE PATENTSCHRIFT**

(45) Veröffentlichungstag und Bekanntmachung des Hinweises auf die Patenterteilung:
**13.04.2011 Patentblatt 2011/15**

(21) Anmeldenummer: **04764381.2**

(22) Anmeldetag: **23.08.2004**

(51) Int Cl.:
***G02C 7/02*** *(2006.01)*

(86) Internationale Anmeldenummer:
**PCT/EP2004/009400**

(87) Internationale Veröffentlichungsnummer:
**WO 2005/036238 (21.04.2005 Gazette 2005/16)**

(54) **PROGRESSIVE BRILLENGLÄSER MIT GERINGER DIVERGENZ UND ROTATION DES ASTIGMATISMUS**

PROGRESSIVE SPECTACLE GLASSES WITH LOW DIVERGENCE AND ROTATION OF ASTIGMATISM

VERRES DE LUNETTES PROGRESSIFS A FAIBLE DIVERGENCE ET ROTATION D'ASTIGMATISME

(84) Benannte Vertragsstaaten:
**DE ES FR GB IT**

(30) Priorität: **29.09.2003 DE 10345214**

(43) Veröffentlichungstag der Anmeldung:
**05.07.2006 Patentblatt 2006/27**

(73) Patentinhaber: **Rodenstock GmbH**
**80469 München (DE)**

(72) Erfinder:
• **ALTHEIMER, Helmut**
**87650 Baisweil-Lauchdorf (DE)**
• **ESSER, Gregor**
**81735 München (DE)**

• **BECKEN, Wolfgang**
**81541 München (DE)**
• **HAIMERL, Walter**
**80337 München (DE)**
• **WELK, Andrea**
**81547 München (DE)**
• **WEHNER, Edda**
**82275 Emmering (DE)**

(74) Vertreter: **Müller-Boré & Partner**
**Patentanwälte**
**Grafinger Straße 2**
**81671 München (DE)**

(56) Entgegenhaltungen:
**US-A- 5 488 442     US-A- 5 715 032**
**US-A- 5 726 734     US-B2- 6 595 637**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zum Herstellen eines progressiven Brillenglases mit zumindest einer progressiven Fläche sowie auf ein progressives Brillenglas mit zumindest einer progressiven Fläche.

Progressive Brillengläser, auch als Gleitsichtgläser bezeichnet, sind allgemein bekannt. Sie weisen einen Fernsichtteil, welcher zum Betrachten von Objekten in größeren Entfernungen ausgelegt ist, einen Nahsichtteil, welcher zum Betrachten von Objekten in näheren Entfernungen ausgelegt ist, und eine Progressionszone, welche zwischen dem Fern- und dem Nahsichtteil angeordnet ist, auf. In der Progressionszone steigt die Wirkung des Brillenglases kontinuierlich von dem Wert des Fernsichtteils auf den Wert des Nahsichtteils. Diese Zunahme der Wirkung des Brillenglases wird als Addition bezeichnet. Zur Erzeugung dieses Wirkungsanstiegs ist eine Änderung der Krümmung zumindest einer Fläche des Brillenglases, welche als progressive Fläche bezeichnet wird, erforderlich. Mit dem Wirkungsanstieg ist jedoch unweigerlich ein die optischen Abbildungseigenschaften negativ beeinflussender Flächenastigmatismus verbunden, welcher typischerweise nur entlang einer ebenen oder gewundenen Linie (Hauptlinie) gleich Null ist und seitlich dieser Linie nach dem Satz von Minkwitz mit dem doppelten Wert de Gradienten der Flächenbrechkraft ansteigt. Infolgedessen treten eine Visusverschlechterung in Form von Verzerrungen und Verzeichnungen auf. Besonders störend wird beim dynamischen Sehen ein "Schaukeln" und "Pumpen" des auf der Netzhaut wahrgenommenen Bildes empfunden, wodurch die Trageeigenschaften der progressiven Brille unter Umständen stark beeinträchtigt werden.

Aus der Patentschrift DE 43 42 234 C2 ist ein progressives Brillenglas bekannt, welches eine progressive Fläche aufweist, wobei der maximale Wert des Gradienten des mittleren Flächenbrechwertes der progressiven Oberfläche in einem in der Progressionszone angeordneten Teil der Hauptlinie liegt, und wobei über die gesamte progressive Fläche des Brillenglases der Gradient des Zylinders bzw. Astigmatismus der Oberfläche einen Wert hat, der kleiner ist als das durch Multiplizieren der Addition mit einem Koeffizienten $k_{c\,max}$ von konstantem Wert erhaltene Produkt.

Eine Aufgabe der vorliegende Erfindung ist es, ein progressives Brillenglas bereitzustellen, welches verbesserte Trageeigenschaften aufweist. Ferner ist eine Aufgabe der Erfindung ein Verfahren zum Herstellen eines erfindungsgemäßen progressiven Brillenglases bereitzustellen.

Diese Aufgabe wird gemäß der vorliegenden Erfindung durch ein Verfahren zum Herstellen eines progressiven Brillenglases mit den in Anspruch 1 angegebenen Merkmalen und ein progressives Brillenglas mit den in Anspruch 13 angegebenen Merkmalen gelöst. Bevorzugte Ausführungsformen sind Inhalt der unabhängigen Ansprüche.

Gemäß der Erfindung wird ein Verfahren zum Herstellen eines progressiven Brillenglases mit zumindest einer progressiven Fläche, wobei das Brillenglas

- einen zum Sehen in größere Entfernungen ausgelegten Fernsichtteil mit einem Fembezugspunkt,
- einen zum Sehen in kürzere Entfernungen ausgelegten Nahsichtteil mit einem Nahbezugspunkt und
- eine zwischen dem Fern- und dem Nahsichtteil angeordnete Progressionszone, in welcher die Wirkung des Brillenglases, von dem Wert in dem Fernbezugspunkt auf den Wert in dem Nahbezugspunkt entlang einer Hauptlinie um einen als Addition bezeichneten Wert zunimmt,

umfaßt,

wobei ein Berechnungs- und Optimierungsschritt des progressiven Brillenglases derart erfolgt, daß der Betrag der Rotation $|rot\vec{A}|$ und/oder der Divergenz $|div\vec{A}|$ eines vektoriellen Astigmatismus $\vec{A}$ möglichst klein ist; und

- ein globales Maximum des Betrages $|div\vec{A}|$ der Divergenz des vektoriellen Astigmatismus $\vec{A}$ außerhalb der Zone guter Sicht des Brillenglases, in welcher der Betrag des vektoriellen Astigmatismus $\vec{A}$ kleiner als 0,6 dpt ist, und bevorzugt im peripheren Bereich des Brillenglases liegt; und/oder
- der Betrag $|rot\vec{A}|$ der Rotation des vektoriellen Astigmatismus Ä im Nahsichtteil und/oder im Fernsichtteil nicht über einen maximalen Wert von $|rot\vec{A}|_{max} \approx$ 0,25 Addition/dpt * dpt/mm ansteigt,

wobei der Betrag $|\vec{A}|$ des vektoriellen Astigmatismus $\vec{A}$ gleich zu dem Betrag und die Richtung des vektoriellen Astigmatismus $\vec{A}$ das Doppelte des Winkels der Achslage eines Astigmatismus in Gebrauchsstellung des progressiven Brillenglases oder eines Flächenastigmatismus der zumindest einen progressiven Fläche des progressiven Brillenglases ist.

Der Fernsichtteil ist üblicherweise im oberen Teil und der Nahsichteil im unteren Teil des Brillenglases in Gebrauchsstellung angeordnet. Üblicherweise werden der Fernsichtteil zum Sehen ins Unendliche und der Nahsichtteil insbesondere zum Lesen ausgelegt. Bei Brillen für Spezialanwendungen, z.B. Pilotenbrillen oder Brillen für Bildschirmarbeit, können der Fern- und der Nahsichtteil anders angeordnet sowie für andere Entfernungen ausgelegt sein. Ferner können mehrere Nah- und Fernsichtteile sowie Progressionszonen vorhanden sein.

Das progressive Brillenglas kann eine (Vorder- oder Rückfläche) oder zwei progressiven Flächen aufweisen.

Die progressive Fläche kann die Augenseite bzw. Rückseite oder die Objektseite bzw. Vorderseite des Brillenglases sein, wobei üblicherweise die gegenüberliegende Fläche eine sphärische oder torische Fläche ist, welche nicht zur flächenhaften Variation des Astigmatismus des Brillenglases beiträgt. Bei einem Brillenglas mit zwei progressiven Flächen entstehen die klein zu haltenden Ableitungen des vektoriellen Astigmatismus $|\overrightarrow{rotA}|$ und $|\overrightarrow{divA}|$ durch die kombinierte Wirkung von Vorder- und Rückfläche (d.h. augen- und objektseitiger Fläche). Der Wert der Addition ist als die Differenz der Gebrauchswerte der Brechkraft im Fern- und Nahbezugspunkt berechnet.

Erfindungsgemäß wird ein progressives Brillenglas bereitgestellt, dessen Eigenschaften in Bezug auf die räumlichen Variationen des Astigmatismus einschließlich seiner Richtungsinformation besonders günstig, d.h. möglichst klein sind. Erfindungsgemäß wird erkannt, daß solche Richtungsvariationen eine Ursache für die als Pumpen oder Schaukeln bezeichnete Veränderung des Seheindruckes bei Kopf- oder Blickbewegungen sind.

Insbesondere wurde erkannt, daß die Veränderung bzw. Variation der Achslage des Astigmatismus nicht nur ein sekundärer, sondern - im Gegenteil - ein wichtiger Parameter ist. Im Vergleich dazu sind Brillengläser, die dem Stand der Technik entsprechen, bisher nie unter Berücksichtigung der räumlichen Variation ihres Flächenastigmatismus, einschließlich seiner Richtungsinformation, berechnet worden.

Von den Eigenschaften der Flächen von progressiven Brillengläsern wurden bisher in der Literatur in der Regel höchstens die zweiten Ableitungen der Pfeilhöhen diskutiert. In einigen Fällen, wie zum Beispiel in der DE 4 342 234 C2, werden Gradienten des Flächenbrechwertes $\nabla D(x, y)$ oder des Flächenastigmatismus $\nabla A(x, y)$, also dritte Ableitungen der Pfeilhöhen der Fläche, besprochen. In der genannten Patentschrift wird an mehreren Stellen auf die Relevanz dieser Gradienten für das dynamische Sehen hingewiesen und somit für die Sehbedingungen bei Kopf- oder Blickbewegungen oder Kombinationen hiervon.

Hierbei wird der Astigmatismus jedoch stets nur als eine zweidimensionale skalare Funktion interpretiert, die wie üblich proportional zur Differenz $|1/r_1 - 1/r_2|$ der Hauptkrümmungsradien definiert ist. Die konventionelle Betrachtung läßt die Achslage des Astigmatismus außer Betracht und konzentriert sich nur auf dessen Betrag, beziehungsweise wie in DE 4 342 234 C2 auf den Gradient des Betrages des Flächenastigmatismus.

Die vorliegende Erfindung basiert auf der neuen Erkenntnis, daß bei der räumlichen Änderung einer Größe, welche wie der Astigmatismus auch eine Achslage besitzt, nicht nur die Änderung des Betrages, sondern auch die Änderung dieser Richtungsinformation von Interesse ist. Allerdings geht jede Information über die Änderung der Achslage des Astigmatismus, die für die augenoptische Korrektion entscheidend ist, bei der Reduktion des Vektorfeldes des Astigmatismus auf seinen Betrag verloren.

Die Rolle, welche die Achslage des Astigmatismus spielt, kann z.B. anhand der Refraktionsbestimmung illustriert werden. Hier findet die Bestimmung der Achslage des Astigmatismus in der Reihenfolge der Vorgehensweise noch vor der Festlegung des Betrages des Astigmatismus statt. Der Grund hierfür liegt darin, daß bei der Bestimmung der Achslage, z.B. mit der Kreuzzylindermethode, ein vom Betrag her geschätzter Zylinder mit dem Hilfsmittel des Kreuzzylinders so lange hinsichtlich seiner Achslage geändert wird, bis diese bestmöglich festgelegt ist. Daraufhin folgt die endgültige Festlegung des Zylinderbetrages. Ein Versuch den Betrag des Zylinders schon vor der Festlegung der Achse zu bestimmen, würde darauf hinauslaufen, daß im Verlauf der Betragsbestimmung schief gekreuzte Zylinder auftreten würden. Dies würde bedeuten, daß man einen resultierenden Zylinder erhalten würde, dessen Betrag von der Größe des Korrektionszylinders und der Größe des Achsfehlers abhängt. Somit hätte man zwei sich permanent ändernde Parameter, die wechselweise immer wieder aufs neue korrigiert werden müßten. Ist die Achslage des Astigmatismus dagegen schon bestimmt, so ändert man beim Vorhalten des Kreuzzylinders den Korrektionszylinder stets um den vollen Betrag. Ist schließlich die Achse des Korrektionszylinders richtig bestimmt, so fällt sie mit der des Refraktionsdefizites zusammen und die resultierende zylindrische Wirkung ist Null, wie zum Beispiel in dem Buch "Refraktionsbestimmung", Diepes, H., Verlag Heinz Postenrieder, Pforzheim (1972), Seite 322 beschrieben.

Außer einer Visusverschlechterung hat jeder Astigmatismus auch eine Verzerrung zur Folge, wie oben bereits festgestellt. Das subjektive Empfinden von resultierenden Verzerrungen der Netzhautbilder hängt sogar selbst noch von der Richtung der Achslage ab, wie z.B.: in Reiner, J.: "Auge und Brille", 4. Auflage, Ferdinand Enke Verlag Stuttgart (1987), Seite 27 beschrieben. Bei Vorliegen eines Astigmatismus nach der Regel oder gegen die Regel ergeben sich Verzerrungen, die für den Brillenträger üblicherweise nur wenig störend sind, da die Verzerrungen nur in senkrechter oder waagerechter Richtung stattfinden. Verzerrungen dieser Art werden oft schon durch die Betrachtung aus seitlicher Position verursacht, sind also nicht unbekannt. Probleme für den Brillenträger treten vorwiegend bei Astigmatismus mit schiefer Achslage auf, da senkrechte und waagerechte Objektelemente schief auf die Netzhaut abgebildet werden. Verzerrungen dieser Art sind sehr viel unverträglicher, da senkrechte und waagerechte Linien im Raum nicht mehr im rechten Winkel zueinander stehen, sondern einen von 90˚ abweichenden Winkel (größer oder kleiner 90˚) miteinander einschließen. Es entstehen Fusionsschwierigkeiten, welche die Gewöhnung an eine Brille erschweren. Erfindungsgemäß wurde erkannt, daß solche Belastungen für die sensorische Fusion auch dann zu erwarten sind, wenn sich die Achslage des Astigmatismus im Verlauf seitlicher Blickbewegungen verändert. Treten dabei astigmatische Wirkungen auf, die zwar vom Betrag her gleich bleiben, aber nun eine schiefe Achslage aufweisen, die sich je nach Durchblicksstelle durch das Brillenglas auch ändert, so kann das zu Unverträglichkeiten des Brillenglases in der Peripherie führen.

Um räumliche Variationen des Astigmatismus beschreiben zu können wird zunächst ein geeigneter vektorieller Astigmatismus definiert. Die räumliche Verteilung dieses vektoriellen Astigmatismus definiert entsprechend ein Vektorfeld. Wenn die Änderung nach Betrag und Richtung, was dem Betrag und der Achslage des Astigmatismus entspricht, dieses vektoriellen Astigmatismus in die Berechnung bzw. Optimierung eines Brillenglases und insbesondere eines progressiven Brillenglases integriert wird, ergeben sich neue Aspekte, die - wie im Folgenden gezeigt - zu verbesserten Abbildungseigenschaften und damit Trageeigenschaften führen. Besonders zweckmäßig zur Beschreibung der Ableitungen des vektoriellen Astigmatismus $\vec{A}$ ist die Betrachtung seiner Rotation und seiner Divergenz, also der Vektoroperatoren $rot\vec{A} = \vec{\nabla} \times \vec{A}$ und $div\vec{A} = \vec{\nabla} \cdot \vec{A}$.

Auch wenn sich die Erfindung sowohl auf die Betrachtung des Flächenastigmatismus der progressiven Fläche als auch auf den Astigmatismus in Gebrauchsstellung bezieht, werden im folgenden exemplarisch Flächenastigmatismen der progressiven Fläche behandelt. Daher wird im folgenden eine ausführliche Definition des vektoriellen Flächenastigmatismus und anschließend eine kurze analoge Definition des vektoriellen Astigmatismus in Gebrauchsstellung angegeben.

**Definition des vektoriellen Flächenastigmatismus $\vec{A}$**

Gegeben sei die Pfeilhöhe einer progressiven Fläche durch die Funktion

$$z = f(x, y),$$

wobei die Koordinaten $(x, y)$ in der Projektionsebene liegen. Unter Pfeilhöhe wird der Abstand eines Punktes mit Koordinaten $(x, y)$ von der Tangentialebene des Flächenscheitels verstanden.

Zur Berechnung der Hauptkrümmungen wird die erste Grundform

$$g(x,y) = \begin{pmatrix} E & F \\ F & G \end{pmatrix} = \begin{pmatrix} 1+f_x^2 & f_x f_y \\ f_x f_y & 1+f_y^2 \end{pmatrix}$$

sowie die zweite Grundform

$$l(x,y) = \begin{pmatrix} K & L \\ L & M \end{pmatrix} = \frac{-1}{\sqrt{1+f_x^2+f_y^2}} \begin{pmatrix} f_{xx} & f_{xy} \\ f_{xy} & f_{yy} \end{pmatrix}$$

benötigt, wobei die Ableitungen durch $f_x = \partial_x f(x, y)$, $f_y = \partial_y f(x, y)$, $f_{xx} = \partial_x^2 f(x, y)$, $f_{yy} = \partial_y^2 f(x, y)$, $f_{xy} = \partial_x \partial_y f(x, y)$ abgekürzt sind. Die Hauptkrümmungen $k_1$ und $k_2$ und die Hauptkrümmungsrichtungen sind Lösungen des verallgemeinerten Eigenwertproblems

$$\begin{pmatrix} K & L \\ L & M \end{pmatrix}\begin{pmatrix} x_1 & x_2 \\ y_1 & y_2 \end{pmatrix} - \begin{pmatrix} E & F \\ F & G \end{pmatrix}\begin{pmatrix} x_1 & x_2 \\ y_1 & y_2 \end{pmatrix}\begin{pmatrix} k_1 & 0 \\ 0 & k_2 \end{pmatrix} = 0 \, . \tag{1}$$

Die so berechneten Eigenvektoren $(x_1, y_1)$ und $(x_2, y_2)$ sind die Projektionen der Vektoren, die in der Tangentialebene der Brillenglasfläche liegen und dort die Hauptkrümmungsrichtungen angeben.

Zur Berechnung der Hauptkrümmungsrichtungen müssen die Eigenvektoren $(x_1, y_1)$ und $(x_2, y_2)$ nach deren Berechnung auf das System der Tangentialebene transformiert werden. Diese Transformation kann am günstigsten ermittelt werden, indem das ganze Eigenwertproblem selbst in der Tangentialebene formuliert wird. Dies geschieht, indem man es auf die Form

**4**

$$\begin{pmatrix} K & L \\ L & M \end{pmatrix}_{eff} \begin{pmatrix} u_1 & u_2 \\ v_1 & v_2 \end{pmatrix} - \begin{pmatrix} u_1 & u_2 \\ v_1 & v_2 \end{pmatrix} \begin{pmatrix} k_1 & 0 \\ 0 & k_2 \end{pmatrix} = 0 \qquad (2)$$

bringt, denn weil in dieser Darstellung die erste Grundform die Einheitsmatrix ist, müssen die Eigenvektoren $(u_1, v_1)$ und $(u_2, v_2)$ in der Tangentialebene liegen.

Am einfachsten scheint es zu sein, das Originalproblem (1) einfach von links mit $\begin{pmatrix} E & F \\ F & G \end{pmatrix}^{-1}$ zu multiplizieren.

Dies jedoch würde auf eine unsymmetrische Matrix $\begin{pmatrix} K & L \\ L & M \end{pmatrix}_{eff}$ führen, deren Eigenvektoren nicht mehr orthogonal stehen würden, weil das $(u,v)$-Koordinatensystem dann schiefwinklig wäre. Um die Symmetrie beizubehalten, muß zuerst die erste Grundform $g$ auf Diagonalgestalt transformiert werden:

$$W^T g W = g_d \Leftrightarrow g = W g_d W^T = (W g_d^{1/2})(W g_d^{1/2})^T$$

Hierbei ist $g_d$ eine Diagonalmatrix mit den Eigenwerten von $g$ und $W$ ist eine Matrix, in deren Spalten die Eigenvektoren von $g$ stehen. Die Transformation $(W g_d^{1/2})^T$ transformiert einen Vektor $(x, y)$ in die Tangentialebene mittels

$$\begin{pmatrix} u \\ v \end{pmatrix} = (W g_d^{1/2})^T \begin{pmatrix} x \\ y \end{pmatrix},$$

denn die Länge eines Vektors in der $(u, v)$-Ebene ist durch

$$\begin{aligned} (u \quad v)\begin{pmatrix} u \\ v \end{pmatrix} &= (x \quad y)(W g_d^{1/2})(W g_d^{1/2})^T \begin{pmatrix} x \\ y \end{pmatrix} \\ &= \quad (x \quad y) g \begin{pmatrix} x \\ y \end{pmatrix} \end{aligned}$$

gegeben.

Mit jeder Transformation $(W g_d^{1/2})^T$ auf die $(u,v)$-Ebene ist auch $(W g_d^{1/2} R)^T$ eine solche Transformation, wenn

$$R = \begin{pmatrix} \cos\varphi & \sin\varphi \\ -\sin\varphi & \cos\varphi \end{pmatrix}$$ eine Drehung innerhalb der $(u, v)$-Ebene ist. Es ist nun praktisch, die Drehung $R$ so einzurichten, daß die $u$-Achse mit dem Schnitt zusammenfällt, den die Tangentialebene mit der Horizontalebene bildet. Dies kann man durch einen Winkel $\varphi$ erreichen, für den das linke untere Matrixelement von $(W g_d^{1/2} R)^T$ verschwindet. Wie man nachrechnen kann, trifft dies für $\varphi_0 = \arctan\left(\frac{f_y}{f_x}\sqrt{1 + f_x^2 + f_y^2}\right)$ zu, und die resultierende Transformation ist

dann durch

$$T = (Wg_d^{1/2} R(\varphi_0))^T = \frac{Sign(f_x)}{\sqrt{(1+f_y^2)(1+f_x^2+f_y^2)}} \begin{pmatrix} (1+f_y^2) & 0 \\ -f_x f_y & \sqrt{1+f_x^2+f_y^2} \end{pmatrix} \text{ bzw.}$$

$$T^{-1} = \frac{Sign(f_x)}{\sqrt{1+f_y^2}} \begin{pmatrix} \sqrt{1+f_x^2+f_y^2} & 0 \\ f_x f_y & 1+f_y^2 \end{pmatrix}$$

gegeben. Das Eigenwertproblem kann dann durch Einsetzen von $g = T^T T$ in der Form:

$$\begin{pmatrix} K & L \\ L & M \end{pmatrix}\begin{pmatrix} x_1 & x_2 \\ y_1 & y_2 \end{pmatrix} - T^T T \begin{pmatrix} x_1 & x_2 \\ y_1 & y_2 \end{pmatrix}\begin{pmatrix} k_1 & 0 \\ 0 & k_2 \end{pmatrix} = 0 \Leftrightarrow$$

$$\left(T^{-1}\right)^T \begin{pmatrix} K & L \\ L & M \end{pmatrix} T^{-1} T \begin{pmatrix} x_1 & x_2 \\ y_1 & y_2 \end{pmatrix} - T \begin{pmatrix} x_1 & x_2 \\ y_1 & y_2 \end{pmatrix}\begin{pmatrix} k_1 & 0 \\ 0 & k_2 \end{pmatrix} = 0 \Leftrightarrow$$

$$\begin{pmatrix} K & L \\ L & M \end{pmatrix}_{eff}\begin{pmatrix} u_1 & u_2 \\ v_1 & v_2 \end{pmatrix} - \begin{pmatrix} u_1 & u_2 \\ v_1 & v_2 \end{pmatrix}\begin{pmatrix} k_1 & 0 \\ 0 & k_2 \end{pmatrix} = 0$$

geschrieben werden.

Das so auf die Tangentialebene transformierte Eigenwertproblem enthält eine symmetrische Darstellung der zweiten Grundform:

$$\begin{pmatrix} K & L \\ L & M \end{pmatrix}_{eff} = \left(T^{-1}\right)^T \begin{pmatrix} K & L \\ L & M \end{pmatrix} T^{-1} =$$

$$\frac{1}{\left(1+f_y^2\right)\sqrt{1+f_x^2+f_y^2}} \begin{pmatrix} \dfrac{-f_x(1+f_y^2)+f_xf_y(-f_xf_y^2+2f_{xy}(1+f_y^2))}{1+f_x^2+f_y^2} & \dfrac{f_xf_y^2-f_{xy}(1+f_y^2)}{\sqrt{1+f_x^2+f_y^2}} \\ \dfrac{f_xf_y^2-f_{xy}(1+f_y^2)}{\sqrt{1+f_x^2+f_y^2}} & -f_y \end{pmatrix}$$

und ergibt so die Hauptkrümmungen $k_1$ und $k_2$ sowie die zugehörigen Hauptkrümmungsrichtungen $(u_1,v_1)$ und $(u_2,v_2)$.

Zur Definition eines vektoriellen Astigmatismus bzw. eines Vektorfeldes für den Astigmatismus, dessen Betrag durch die Größe $|k_1 - k_2|$ gegeben ist, ist es günstig, die Winkelverdopplung vorzunehmen, die üblicherweise auch vorgenommen wird, um die Achslage des TABO-Schemas in Polarkoordinaten zu überführen, wie zum Beispiel in der Druckschrift WO 01/81979 vorgeschlagen. Ist also die Richtung etwa der ersten Achslage durch den Winkel $\psi = \arctan v_1/u_1$ gegeben, so kann ein vektorieller Astigmatismus definiert werden:

$$\vec{A} = (n-1)|k_2 - k_1| \begin{pmatrix} \cos 2\psi \\ \sin 2\psi \end{pmatrix}$$

$$= \frac{n-1}{(1+f_y^2)(1+f_x^2+f_y^2)^{3/2}} \begin{pmatrix} -2f_x f_{xy} f_y (1+f_y^2) + f_{xx}(1+f_y^2)^2 + f_x^2(-1+f_y^2)f_{yy} - (1+f_y^2)f_{yy} \\ 2\sqrt{1+f_x^2+f_y^2}\,(f_{xy} + f_{xy}f_y^2 - f_x f_y f_{yy}) \end{pmatrix}$$

$$(3),$$

wobei $n$ der Brechungsindex ist.

Dabei ist anzumerken, daß die zweite Achslage nicht zu einem neuen vektoriellen Astigmatismus führt, sondern nur ein globales Vorzeichen bewirkt: die zweite Achslage steht senkrecht auf der ersten, und durch die Winkelverdopplung wird der rechte Winkel auf 180˚ aufgespreizt.

Analog zum vektoriellen Flächenastigmatismus, wird auch ein Astigmatismus in Gebrauchsstellung vektoriell als $|k_2 - k_1|(\cos 2\psi, \sin 2\psi)$ definiert. Dabei sind $k_{1,2}$ allerdings nicht die Eigenwerte der zweiten Grundform der brechenden Fläche, sondern der ausfallenden Wellenfront. Die brechungsindexabhängige Größe $(n\text{-}1)$ ist dabei - anders als beim Flächenastigmatismus in Gl. (3) - in den Eigenwerten $k_{1,2}$ enthalten und braucht daher nicht als Zusatzfaktor anmultipliziert zu werden. Der Winkel $\psi$ ist dabei in der Tangentialebene an die Wellenfront gemeint und besitzt als Bezugsrichtung die Schnittgerade dieser Ebene mit der Horizontalebene. Für senkrechten Einfall einer Wellenfront aus dem Unendlichen ergibt sich für den vektoriellen Astigmatismus in Gebrauchsstellung der in Gl. (3) angegebene Vektor, andernfalls ergeben sich abweichende Werte.

Im folgenden wird unter Astigmatismus $\vec{A}$ der nach Gleichung (3) definierte vektorielle Flächenastigmatismus verstanden.

Eine erste Approximation des vektoriellen Astigmatismus wird durch die Annahme erhalten, daß die erste Ableitungen $f_x$, $f_y$ der Pfeilhöhe klein sind gegen 1, d.h. $1 + f_x^2 \approx 1$, $1 + f_y^2 \approx 1$ etc.. Für den vektoriellen Astigmatismus gilt dann:

$$\vec{A} = (n-1) \begin{pmatrix} f_{xx} - f_{yy} \\ 2f_{xy} \end{pmatrix} \qquad\qquad (4)$$

Aus Gleichung (4) folgt, daß der vektorielle Astigmatismus Ausdruck der zweiten Ableitungen der Pfeilhöhe ist.

Es gibt insgesamt vier unabhängige Ableitungen des Vektorfeldes $\vec{A}$, nämlich $\dfrac{\partial A_x}{\partial x}$, $\dfrac{\partial A_x}{\partial y}$, $\dfrac{\partial A_y}{\partial x}$ und $\dfrac{\partial A_y}{\partial y}$.

Sie liegen alle in derselben Größenordnung. Auch wenn sie alle interessant sind, beschränkt sich die folgende Darstellung auf zwei besonders gebräuchliche Kombinationen dieser vier Ableitungen des vektoriellen Astigmatismus $\vec{A}$, nämlich seine Divergenz

$$div\vec{A} = \vec{\nabla} \cdot \vec{A} = \frac{\partial A_x}{\partial x} + \frac{\partial A_y}{\partial y} \qquad\qquad (5)$$

sowie die z-Komponente seiner Rotation

$$(rot\vec{A})_z = (\vec{\nabla} \times \vec{A})_z = \frac{\partial A_y}{\partial x} - \frac{\partial A_x}{\partial y}. \tag{6}$$

Aus Gründen der Einfachheit wird in folgenden wegen $rt\vec{A} = (0,0,(rot\vec{A})_z)$ anstatt $(rot\vec{A})_z$ einfach $rot\vec{A}$ geschrieben.

Die aus der Gleichung (3) für den vektoriellen Astigmatismus $\vec{A}$ hervorgehenden exakten Formeln für $rot\vec{A}$ und $div\vec{A}$ werden aus Platzgründen nicht angegeben, sondern die daraus gewonnenen exakten Resultate werden im folgenden graphisch dargestellt. Wenn die nach Gleichung (3) erhaltene Annäherung für den vektoriellen Astigmatismus in Gleichungen 5 und 6 eingesetzt wird, erhält man die folgenden Annäherungen für die Divergenz und Rotation des vektoriellen Astigmatismus:

$$div\vec{A} \propto f_{xx} + f_{xyy} \qquad \text{und} \qquad (rot\vec{A})_z \propto f_{yyy} + f_{xxy} \tag{7}$$

Aus Gleichung (7) ist ersichtlich, daß die Rotation und die Divergenz des vektoriellen Astigmatismus $\vec{A}$ die Ableitungen der Pfeilhöhe charakterisieren. Insgesamt gibt es vier unabhängige dritte Ableitungen der Pfeilhöhe, nämlich $f_{xxx}$, $f_{xxy}$, $f_{xyy}$, $f_{yyy}$.

Die Brillengläser, welche mittels erfindungsgemäßen Verfahren hergestellt sind, weisen deutlich verbesserte Trageeigenschaften auf als Brillengläser, welche mit konventionellen Verfahren ohne Optimierung bezüglich sowohl dem Betrag als auch der Richtung des Astigmatismus des Brillenglases hergestellt sind. Es ist anzumerken, daß in der vorliegenden Anmeldung die Rede von dem dem progressiven Brillenglas inhärenten Astigmatismus ist, welcher nicht zu Korrektionszwecken des augeneigenen Astigmatismus dient (letzterer ist ohnehin Ober das gesamte Brillenglas konstant und besitzt daher verschwindende Ableitungen).

Der Berechnungs- und Optimierungsschritt erfolgt derart, daß ein globales Maximum des Betrages $|div\vec{A}|$ der Divergenz des vektoriellen Astigmatismus $\vec{A}$ außerhalb der Zone guter Sicht des Brillenglases, in welcher der Betrag des vektoriellen Astigmatismus $|\vec{A}|$ kleiner als 0,6 dpt, vorzugsweise kleiner oder gleich 0,5 dpt ist und bevorzugt im peripheren Bereich des Brillenglases liegt.

Somit wird erzielt, daß die störenden Maxima und Minima von $div\vec{A}$ in einen Bereich, welcher nicht häufig zu Sehzwecken benutzt wird, verlagert und dadurch die Trageeigenschaften des Brillenglases verbessert werden. Ein Astigmatismus mit einem Wert über 0,5 dpt führt zu einem unscharf wahrgenommenen Bild auf der Netzhaut.

Weiter bevorzugt erfolgt der Berechnungs- und Optimierungsschritt derart, daß die x-Koordinate der Position des globalen Maximums des Betrages $|div\vec{A}|$ der Divergenz des vektoriellen Astigmatismus größer als 6,0 mm und die y-Koordinate kleiner als -8,5 mm ist, wobei $x$ die horizontale Achse und $y$ die vertikale Achse in Gebrauchsstellung bezeichnen, und der Nullpunkt $x = 0$, $y = 0$ vier Millimeter unterhalb des Zentrierpunkts des Brillenglases liegt.

Hierzu ist die horizontale Achse $x$ parallel zu der Richtung, welche durch die beiden Permanentmarkierungen des ungerandeten Brillenglases, welche sich im Abstand von 17 mm seitlich von der Hauptlinie befinden, definiert. Die vertikale Achse $y$ steht senkrecht zu der horizontalen Richtung. Der Nullpunkt $x = 0$, $y = 0$ befindet sich vier Millimeter unterhalb des Zentrierpunkts des Brillenglases und stimmt für nicht vordezentrierte Gläser mit dem Glasmittelpunkt überein. Dieser Punkt ist bei den meisten Gläser auch der Prismenreferenzpunkt, d.h. der Punkt in dem die prismatische Wirkung des Brillenglases bestimmt werden soll. Der Zentrierpunkt liegt vier mm oberhalb des Glasmittelpunkts und ist in Form eines Kreuzes auf dem Brillenglas vorgestempelt. Bei der Betrachtung des Flächenastigmatismus der progressiven Fläche liegen $x$ und $y$ in einer Tangentialebene, welche durch den Scheitel der progressiven Fläche verläuft.

Innerhalb des *Gebietes* $y \geq -8mm$ liegen überhaupt keine nennenswerten Extrema der Divergenz $|div\vec{A}|$ des vektoriellen Astigmatismus $\vec{A}$. Dieses Merkmal ist für alle Additionen erfüllt.

Ein Extremum von $div\vec{A}$ wird als "nennenswert" bezeichnet, wenn sein Wert dem Betrage nach über dem (0,1/mm)-fachen der Addition liegt.

Vorzugsweise erfolgt ferner der Berechnungs- und Optimierungsschritt derart, daß für alle progressiven Flächen mit Addition $\geq 2,0$ dpt alle den Wert des (0,1/mm)-fachen der Addition überschreitenden Extrema des Betrages $|div\vec{A}|$ der Divergenz des vektoriellen Astigmatismus $\vec{A}$ außerhalb des Gebiets $y \geq -9mm$ des Brillenglases liegen. Dieses Merkmal ist für alle Basiskurven erfüllt.

Weiter bevorzugt erfolgt der Berechnungs- und Optimierungsschritt derart, daß der Betrag $|rot\vec{A}|$ der Rotation des vektoriellen Astigmatismus $\vec{A}$ im Nahsichtteil und/oder im Fernsichtteil nicht über einen maximalen Wert von $|rot\vec{A}|_{max} \approx 0,25$ Addition/dpt * dpt/mm ansteigt.

Besonders bevorzugt erfolgt der Berechnungs- und Optimierungsschritt derart, daß der Betrag $|rot\vec{A}|$ der Rotation des vektoriellen Astigmatismus $\vec{A}$ im Horizontalschnitt bei $y = -14mm$ nicht über einen maximalen Wert von $|rot\vec{A}|_{max}$

≈ 0,115 Addition/dpt * dpt/mm, bevorzugt $|rot\vec{A}|_{max}$ ≈ 0,08 Addition/dpt * dpt/mm ansteigt.

Vorzugsweise erfolgt ferner der Berechnungs- und Optimierungsschritt derart, daß der Betrag $|rot\vec{A}|$ der Rotation des vektoriellen Astigmatismus $\vec{A}$ im Horizontalschnitt bei *y* = +6*mm* nicht über einen maximalen Wert von $|rot\vec{A}|_{max}$ ≈ 0,115 Addition/dpt * dpt/mm, bevorzugt $|rot\vec{A}|_{max}$ ≈ 0,06 Addition/dpt * dpt/mm ansteigt.

Bevorzugt erfolgt der Berechnungs- und Optimierungsschritt derart, daß im Fernsichtteil zwischen *y* = 3mm und *y* = 5mm zumindest ein Horizontalschnitt *y* = *const* existiert, entlang dessen der Beitrag $|rot\vec{A}|$ der Rotation des vektoriellen Astigmatismus $\vec{A}$ von der Hauptlinie an monoton nach außen hin bis zu einer Koordinate von |*x*| = 16*mm* ansteigt.

Ferner ist es bevorzugt, daß der Berechnungs- und Optimierungsschritt derart erfolgt, daß die Divergenz $div\vec{A}$ des vektoriellen Astigmatismus $\vec{A}$ im Horizontalschnitt bei *y* = 0*mm* nicht über einen maximalen Wert von $(div\vec{A})_{max}$ ≈ (0,11Addition/dpt + 0,03) dpt/mm , bevorzugt $(div\vec{A})_{max}$ ≈ (0,08Addition/dpt + 0,03) dpt/mm ansteigt.

Vorzugsweise erfolgt der Berechnungs- und Optimierungsschritt derart, daß die Divergenz $div\vec{A}$ des vektoriellen Astigmatismus $\vec{A}$ im Horizontalschnitt bei *y* = 0*mm* nicht unter einen minimalen Wert von $(div\vec{A})_{min}$ ≈ (-0,07Addition/dpt - 0,11) dpt/mm, bevorzugt $(div\vec{A})_{min}$ ≈ (-0,05Addition/dpt - 0,08) dpt/mm absinkt.

Insbesondere bevorzugt ist ein Verfahren zum Herstellen eines progressiven Brillenglases, wobei der Berechnungs- und Optimierungsschritt derart erfolgt, daß die Divergenz $div\vec{A}$ des vektoriellen Astigmatismus $\vec{A}$ im Horizontalschnitt bei *y* = -14*mm* nicht über einen maximalen Wert von $(div\vec{A})_{max}$ ≈ (0,12Addition/dpt + 0,06) dpt/mm ansteigt.

Weiterhin ist es bevorzugt, wenn der Berechnungs- und Optimierungsschritt derart erfolgt, daß die Divergenz $div\vec{A}$ des vektoriellen Astigmatismus $\vec{A}$ im Horizontalschnitt bei *y* = -14*mm* nicht unter einen minimalem Wert von $(div\vec{A})_{min}$ ≈ (-0,13Addition/dpt - 0,05) dpt/mm absinkt.

Gemäß der Erfindung wird ferner ein progressives Brillenglas mit zumindest einer progressiven Fläche bereitgestellt, wobei das Brillenglas zumindest:

- ein zum Sehen in größere Entfernungen ausgelegtes Fernsichtteil mit einem Fernbezugspunkt;
- ein zum Sehen in kürzere Entfernungen ausgelegtes Nahsichtteil mit einem Nahbezugspunkt; und
- eine zwischen dem Fern- und dem Nahsichtteil angeordnete Progressionszone, in der die Wirkung des Brillenglases von dem Wert in dem Fernbezugspunkt auf den Wert in dem Nahbezugspunkt entlang einer Hauptlinie um einen als Addition bezeichneten Wert zunimmt,
umfaßt, wobei

- das globale Maximum des Betrages $|div\vec{A}|$ der Divergenz eines vektoriellen Astigmatismus $\vec{A}$ außerhalb der Zone guter Sicht des Brillenglases, in welcher der Betrag des vektoriellen Astigmatismus $|\vec{A}|$ kleiner als 0,6 dpt, vorzugsweise kleiner oder gleich 0,5 dpt ist, und bevorzugt im peripheren Bereich des Brillenglases liegt; und/oder
- der Betrag $|rot\vec{A}|$ der Rotation des vektoriellen Astigmatismus $\vec{A}$ im Nahsichtteil und/oder im Fernsichtteil nicht über einen maximalen Wert von $|rot\vec{A}|_{max}$ ≈ 0,25 Addition/dpt * dpt/mm ansteigt, und

wobei der Betrag $|\vec{A}|$ des vektoriellen Astigmatismus $\vec{A}$ gleich zu dem Betrag und die Richtung des vektoriellen Astigmatismus $\vec{A}$ das Doppelte des Winkels der Achslage eines Astigmatismus in Gebrauchsstellung des progressiven Brillenglases oder eines Flächenastigmatismus der zumindest einen progressiven Fläche des progressiven Brillenglases ist.

In Bezug auf die wichtigen Merkmale und Definitionen wird auf die oben ausgeführte detaillierte Beschreibung des Verfahren zum Herstellen eines Brillenglases verwiesen.

Vorzugsweise ist die x- Koordinate der Position des globalen Maximums des Betrages $|div\vec{A}|$ der Divergenz des vektoriellen Astigmatismus $\vec{A}$ größer als 6,0 mm und die *y*-Koordinate kleiner als -8,5 mm, wobei *x* die horizontale Achse und *y* die vertikale Achse in Gebrauchsstellung bezeichnen, und der Nullpunkt *x* = 0, *y* = 0 vier Millimeter unterhalb des Zentrierpunkts des Brillenglases liegt.

Weiter bevorzugt liegen für alle progressiven Flächen mit Addition ≥ 2,0 dpt alle den Wert (0,1/mm)-fachen der Addition überschreitenden Extrema des Betrages $|div\vec{A}|$ der Divergenz des vektoriellen Astigmatismus $\vec{A}$ außerhalb des *Gebiets y* ≥ -9*mm* des Brillenglases.

Besonders bevorzugt steigt der Betrag $|rot\vec{A}|$ der Rotation des vektoriellen Astigmatismus $\vec{A}$ im Horizontalschnitt bei *y* = -14*mm* nicht über einen maximalen Wert von $|rot\vec{A}|_{max}$ ≈ 0,115 Addition/dpt * dpt/mm, bevorzugt $|rot\vec{A}|_{max}$ ≈ 0,08 Addition/dpt * dpt/mm an.

Vorzugsweise steigt der Betrag $|rot\vec{A}|$ der Rotation des vektoriellen Astigmatismus $\vec{A}$ im Horizontalschnitt bei *y* = +6*mm* nicht über einen maximalen Wert von $|rot\vec{A}|_{max}$ ≈ 0,115 Addition/dpt * dpt/mm , bevorzugt $|rot\vec{A}|_{max}$ ≈ 0,06 Addition/dpt * dpt/mm an.

Weiter bevorzugt existiert im Fernsichtteil zwischen y = 3*mm* und *y* = 5*mm* zumindest ein Horizontalschnitt *y* = *const.*, entlang dessen der Betrag $|rot\vec{A}|$ der Rotation des vektoriellen Astigmatismus $\vec{A}$ von der Hauptlinie an monoton nach außen hin bis zu einer Koordinate von |*x*| = 16*mm* ansteigt.

Ferner ist es bevorzugt wenn die Divergenz $div\vec{A}$ des vektoriellen Astigmatismus $\vec{A}$ im Horizontalschnitt bei *y*

= 0*mm* nicht über einen maximalen Wert von $(div\vec{A})_{max} \approx (0,11\text{Addition/dpt} + 0,03)$ dpt/mm, bevorzugt $(div\vec{A})_{max} \approx (0,08\text{Addition/dpt} + 0,03)$ dpt/mm ansteigt.

Vorzugsweise sinkt die Divergenz div$\vec{A}$ des vektoriellen Astigmatismus $\vec{A}$ im Horizontalschnitt bei *y* = 0*mm* nicht unter einen minimalen Wert von $(div\vec{A})_{min} \approx (-0,07\text{Addition/dpt} - 0,11)$ dpt/mm, bevorzugt $(div\vec{A})_{min} \approx (-0,05\text{Addition/dpt} - 0,08)$ dpt/mm ab.

Weiter bevorzugt steigt die Divergenz div$\vec{A}$ des vektoriellen Astigmatismus $\vec{A}$ im Horizontalschnitt bei *y* =-14mm nicht über einen maximalen Wert von $(div\vec{A})_{max} \approx (0,12\text{Addition/dpt} + 0,06)$ dpt/mm an.

Besonders bevorzugt sinkt die Divergenz div$\vec{A}$ des vektoriellen Astigmatismus $\vec{A}$ im Horizontalschnitt bei *y* =-14*mm* nicht unter einen minimalem Wert von $(div\vec{A})_{min} \approx (-0,13\text{Addition/dpt} - 0,05)$ dpt/mm ab.

Die Erfindung wird im folgenden anhand begleitender Zeichnungen bevorzugter Ausführungsformen beispielhaft beschrieben. Es zeigt:

Fig. 1A    den Verlauf des Flächenbrechwertes der Vorderfläche eines Brillenglases gemäß dem Stand der Technik in dpt als Funktion der Koordinaten *(x, y)* in mm;

Fig. 1B    den Verlauf des Flächenbrechwertes der Vorderfläche eines Brillenglases gemäß Ausführungsbeispiel 1 in dpt als Funktion der Koordinaten (*x*, *y*) in mm;

Fig. 1C    den Verlauf des Flächenbrechwertes der Vorderfläche eines Brillenglases gemäß Ausführungsbeispiel 2 in dpt als Funktion der Koordinaten (x,y) in mm;

Fig. 2A    den Verlauf des Betrages des Flächenastigmatismus der Vorderfläche eines Brillenglases gemäß dem Stand der Technik in dpt als Funktion der Koordinaten (*x*, *y*) in mm;

Fig. 2B    den Verlauf des Betrages des Flächenastigmatismus der Vorderfläche eines Brillenglases gemäß Ausführungsbeispiel 1 in dpt als Funktion der Koordinaten (*x*, *y*) in mm;

Fig. 2C    den Verlauf des Betrages des Flächenastigmatismus der Vorderfläche eines Brillenglases gemäß Ausführungsbeispiel 2 in dpt als Funktion der Koordinaten (*x*, *y*) in mm;

Fig. 3A    den Verlauf des Gradienten des Betrages des Flächenastigmatismus der Vorderfläche eines Brillenglases gemäß dem Stand der Technik in dpt/mm als Funktion der Koordinaten (*x*, *y*) in mm;

Fig. 3B    den Verlauf des Gradienten des Betrages des Flächenastigmatismus der Vorderfläche eines Brillenglases gemäß Ausführungsbeispiel 1 in dpt als Funktion der Koordinaten (*x*, *y*) in mm.

Fig. 3C    den Verlauf des Gradienten des Betrages des Flächenastigmatismus der Vorderfläche eines Brillenglases gemäß Ausführungsbeispiel 2 in dpt als Funktion der Koordinaten (*x, y*) in mm;

Fig. 4A    das Vektorfeld des Flächenastigmatismus der Vorderfläche eines Brillenglases gemäß dem Stand der Technik als Funktion der Koordinaten (*x*, *y*) in mm;

Fig. 4B    das Vektorfeld des Flächenastigmatismus der Vorderfläche eines Brillenglases gemäß Ausführungsbeispiel 1 alsFunktionder Koordinaten (*x*, *y*) in mm;

Fig. 4C    das Vektorfeld des Flächenastigmatismus der Vorderfläche eines Brillenglases gemäß Ausführungsbeispiel 2 als Funktion der Koordinaten (x,y) in mm;

Fig. 5A    die Rotation *rot$\vec{A}$* des Flächenastigmatismus der Vorderfläche eines Brillenglases gemäß Stand der Technik in dpt/mm als Funktion der Koordinaten (*x*, *y*) in mm;

Fig. 5B    die Rotation *rot$\vec{A}$* des Flächenastigmatismus der Vorderfläche eines Brillenglases gemäß Ausführungsbeispiel 1 in dpt/mm als Funktion der Koordinaten (*x*, *y*) in mm;

Fig. 5C    die Rotation *rot$\vec{A}$* des Flächenastigmatismus der Vorderfläche eines Brillenglases gemäß Ausführungsbeispiel 2 in dpt/mm als Funktion der Koordinaten (*x*, *y*) in mm;

Fig. 6A    die Divergenz *div$\vec{A}$* des Flächenastigmatismus der Vorderfläche eines Brillenglases gemäß dem Stand der Technik in dpt/mm als Funktion der Koordinaten (*x*, *y*) in mm;

Fig. 6B    die Divergenz *div$\vec{A}$* des Flächenastigmatismus der Vorderfläche eines Brillenglases gemäß Ausführungsbeispiel 1 in dpt/mm als Funktion der Koordinaten (x,y) in mm;

Fig. 6C    die Divergenz *div$\vec{A}$* des Flächenastigmatismus der Vorderfläche eines Brillenglases gemäß Ausführungsbeispiel 2 in dpt/mm als Funktion der Koordinaten (*x*, *y*) in mm;

Fig. 7A    den Verlauf des Betrages der Rotation |*rot$\vec{A}$*| des Flächenastigmatismus der Vorderfläche eines Brillenglases gemäß dem Stand der Technik in dpt/mm bei einem horizontalen Schnitt *y* = 3*mm* ;

Fig. 7B    den Verlauf des Betrages der Rotation |*rot$\vec{A}$*| des Flächenastigmatismus der Vorderfläche eines Brillenglases gemäß Ausführungsbeispiel 1 in dpt/mm bei einem horizontalen Schnitt *y* = 4,8*mm*;

Fig. 7C    den Verlauf des Betrages der Rotation |*rot$\vec{A}$*| des Flächenastigmatismus der Vorderfläche eines Brillenglases gemäß Ausführungsbeispiel 2 in dpt/mm bei einem horizontalen Schnitt *y* = 3*mm*;

Fig. 7D    den Verlauf des Betrages der Rotation |*rot$\vec{A}$*| des Flächenastigmatismus der Vorderfläche einer Serie Brillengläser gemäß Ausführungsbeispiel 2 mit Additionen von 2,0, 2,5 und 3,0 dpt in dpt/mm bei einem horizontalen Schnitt *y* = 3*mm* ;

Fig. 8A    den Verlauf des Betrages der Rotation |*rot$\vec{A}$*| des Flächenastigmatismus der Vorderfläche eines Brillenglases gemäß dem Stand der Technik in dpt/mm bei einem horizontalen *Schnitt y = 6mm ;*

Fig. 8B den Verlauf des Betrages der Rotation |$rot\vec{A}$| des Flächenastigmatismus der Vorderfläche eines Brillenglases gemäß Ausführungsbeispiel 1 in dpt/mm bei einem horizontalen Schnitt *y = 6mm ;*

Fig. 8C den Verlauf des Betrages der Rotation |$rot\vec{A}$| des Flächenastigmatismus der Vorderfläche eines Brillenglases gemäß Ausführungsbeispiel 2 in dpt/mm bei einem horizontalen Schnitt *y = 6mm ;*

Fig. 8D den Verlauf des Betrages der Rotation |$rot\vec{A}$| des Flächenastigmatismus der Vorderfläche einer Serie Brillengläser gemäß Ausführungsbeispiel 1 mit Additionen von 1,0, 2,0, 2,5, 3,0 und 3.5 dpt in dpt/mm bei einem horizontalen Schnitt *y = 6mm ;*

Fig. 8E den Verlauf des Betrages der Rotation |$rot\vec{A}$| des Flächenastigmatismus der Vorderfläche einer Serie Brillengläser gemäß Ausführungsbeispiel 2 mit Additionen von 1,0, 2,0, 2,5, 3,0 und 3,5 dpt dpt in dpt/mm bei einem horizontalen Schnitt *y = 6mm* ;

Fig. 9A den Verlauf des Betrages der Rotation |$rot\vec{A}$| des Flächenastigmatismus der Vorderfläche eines Brillenglases gemäß dem Stand der Technik in dpt/mm bei einem horizontalen *Schnitt y = -14mm ;*

Fig. 9B den Verlauf des Betrages der Rotation |$rot\vec{A}$| des Flächenastigmatismus der Vorderfläche eines Brillenglases gemäß Ausführungsbeispiel 1 in dpt/mm bei einem horizontalen *Schnitt y = -14mm;*

Fig. 9C den Verlauf des Betrages der Rotation |$rot\vec{A}$| des Flächenastigmatismus der Vorderfläche eines Brillenglases gemäß Ausführungsbeispiel 2 in dpt/mm bei einem horizontalen Schnitt *y = -14mm;*

Fig. 9D den Verlauf des Betrages der Rotation |$rot\vec{A}$| des Flächenastigmatismus der Vorderfläche einer Serie Brillengläser gemäß Ausführungsbeispiel 1 mit Additionen von 1,0, 2,0, 2,5, 3,0 und 3,5 dpt in dpt/mm bei einem horizontalen *Schnitt y = -14mm* ;

Fig. 9E den Verlauf des Betrages der Rotation |$rot\vec{A}$| des Flächenastigmatismus der Vorderfläche einer Serie Brillengläser gemäß Ausführungsbeispiel 2 mit Additionen von 1,0, 2,0, 2,5, 3,0 und 3,5 dpt in dpt/mm bei einem horizontalen Schnitt *y = -14mm* ;

Fig. 10A den Verlauf der Divergenz |$rot\vec{A}$| des Flächenastigmatismus der Vorderfläche eines Brillenglases gemäß dem Stand der Technik in dpt/mm bei einem horizontalen *Schnitt y = 0mm ;*

Fig. 10B den Verlauf der Divergenz *$div\vec{A}$* des Flächenastigmatismus der Vorderfläche eines Brillenglases gemäß Ausführungsbeispiel 1 in dpt/mm bei einem horizontalen Schnitt *y = 0mm ;*

Fig. 10C den Verlauf der Divergenz *$div\vec{A}$* des Flächenastigmatismus der Vorderfläche eines Brillenglases gemäß Ausführungsbeispiel 2 in dpt/mm bei einem horizontalen Schnitt *y = 0mm ;*

Fig. 10D den Verlauf der Divergenz *$div\vec{A}$* des Flächenastigmatismus der Vorderfläche einer Serie Brillengläser gemäß Ausführungsbeispiel 1 mit Additionen 1,0, 2,0, 2,5, 3,0 und 3,5 dpt in dpt/mm bei einem horizontalen Schnitt *y = 0mm ;*

Fig. 10E den Verlauf der Divergenz *$div\vec{A}$* des Flächenastigmatismus der Vorderfläche 1,0, 2,0, 2,5, 3,0 und 3,5 dpt in dpt/mm bei einem horizontalen Schnitt *y = 0mm ;*

Fig. 11A den Verlauf der Divergenz *$div\vec{A}$* des Flächenastigmatismus der Vorderfläche eines Brillenglases gemäß dem Stand der Technik in dpt/mm bei einem horizontalen Schnitt *y = -14mm* ;

Fig. 11 B den Verlauf der Divergenz *$div\vec{A}$* des Flächenastigmatismus der Vorderfläche eines Brillenglases gemäß Ausführungsbeispiel 1 in dpt/mm bei einem horizontalen Schnitt *y = -14mm ;*

Fig. 11C den Verlauf der Divergenz *$div\vec{A}$* des Flächenastigmatismus der Vorderfläche in dpt/mm bei einem horizontalen Schnitt y = -14*mm* gemäß Ausführungsbeispiel 2

Fig. 11 D den Verlauf der Divergenz *$div\vec{A}$* des Flächenastigmatismus der Vorderfläche einer Serie Brillengläser gemäß Ausführungsbeispiel 1 mit Additionen 1,0, 2,0, 2,5, 3,0 und 3,5 dpt in dpt/mm bei einem horizontalen Schnitt *y = -14mm* ;

Fig. 11 E den Verlauf der Divergenz *$div\vec{A}$* des Flächenastigmatismus der Vorderfläche einer Serie Brillengläser gemäß Ausführungsbeispiel 2 mit Additionen 1,0, 2,0, 2,5, 3,0 und 3,5 dpt in dpt/mm bei einem horizontalen Schnitt *y = -14mm* ;

In folgenden werden die Merkmale der Erfindung anhand zweier Ausführungsbeispiele (Ausführungsbeispiel 1 und Ausführungsbeispiel 2) näher erläutert. Ferner wird ein Vergleich mit einem herkömmlichen Brillenglas gemäß dem Stand der Technik vorgenommen.

Alle verglichenen Brillengläser (die Brillengläser der zwei Ausführungsbeispiele sowie des Standes der Technik) weisen eine sphärische/torische Rückfläche (augenseitige Fläche) und eine progressive Vorderfläche (objektseitige Fläche) auf. In diesem Fall lassen sich die Eigenschaften Rotation und Divergenz des Astigmatismus anhand der Eigenschaften der Vorderfläche allein erläutern. Die jeweils progressive Fläche der Brillengläser gemäß der beiden erfindungsgemäßen Ausführungsbeispiele weisen eine Basiskurve von 4 dpt und Addition von 2 dpt auf, wobei der Wert der Addition immer die Differenz der Gebrauchswerte der Brechkraft in Fernbezugspunkt $B_F$ und Nahbezugspunkt $B_N$ angibt.

Für alle Figuren gilt die Koordinatenwahl derart, daß der Nullpunkt (x,y) = (0,0) vier Millimeter unterhalb des Zentrierpunktes $B_z$ liegt, wobei - wie üblich - $x$ die horizontale Richtung und $y$ die vertikale Richtung in Gebrauchsstellung ist. Weiterhin ist im folgenden unter dem Flächenastigmatismus ein wie in Gleichung (3) definierter vektorieller Flächenastigmatismus zu verstehen.

Die Abbildungen zum Stand der Technik sind immer als Figur A gekennzeichnet, jene zum Ausführungsbeispiel 1 bzw. zum Ausführungsbeispiel 2 als Figur B bzw. Figur C. Die jeweils entsprechenden Pfeilhöhen in mm als Funktion von den Koordinaten ($x$, $y$) in mm des Ausführungsbeispiels 1 und Ausführungsbeispiels 2 der Erfindung sind in den Tabellen 3A und 3B offenbart. Tabelle 3A gibt die Pfeilhöhe für die progressive Fläche in mm gemäß dem Ausführungsbeispiel 1 und Tabelle 3B gemäß dem Ausführungsbeispiel 2 der Erfindung an.

In der genannten Situation ist ein Brillenglas erst dann vollständig charakterisiert, wenn außer den Vorderflächeneigenschaften auch noch die Rückflächeneigenschaften sowie weitere Größen spezifiziert werden, welche in Tabelle 1 angegeben sind. Tabelle 1 gibt eine vollständige Charakterisierung der erfindungsgemäßen Gläser der Ausführungsbeispiele 1 und 2, sowie des Standes der Technik an. Da im vorliegenden Fall das Rezept ein Zylinderwert von Null angibt, weisen die Rückflächen der Brillengläser einen Zylinderwert von Null auf. Daher ist nur ihr Flächenbrechwert angegeben. Die Vorderflächen sind nach Basiskurven eingeteilt. Die Tatsache, daß die Vorderfläche des Brillenglases gemäß dem Stand der Technik eine größere Basiskurve als die Gläser der Erfindung besitzt (5,7 dpt statt 4,0 dpt), rührt von der flacheren Durchbiegung der Gläser der Erfindung her. Dieser Unterschied hat aber keine Auswirkungen auf die Verteilung des Vorderflächen-Astigmatismus und somit auf die Vergleichbarkeit der Erfindung mit dem Stand der Technik. Wesentlich für die Vergleichbarkeit ist, daß die Erfindung und der Stand der Technik zur gleichen Verordnung gehören, d.h. gleiche Verordnungswerte aufweisen.

Tabelle 1

| Eigenschaft | Stand der Technik (Progressiv Life 1) | Erfindung (AB 1) | Erfindung (AB 2) |
|---|---|---|---|
| **Flächen** | | | |
| Basiskurve | 5,7 | 4,0 | 4,0 |
| Flächenbrechwert Vorderfläche (dpt) in $B_F$ | 6,5 | 4,5 | 4,5 |
| Flächenbrechwert Rückfläche (dpt) | -5,82 | -4,05 | -4,10 |
| **Bestelldaten** | | | |
| Sphäre (dpt) | 0,5 | 0,5 | 0,5 |
| Zylinder (dpt) | 0,0 | 0,0 | 0,0 |
| Achse (Grad) | 0,0 | 0,0 | 0,0 |
| Addition (dpt) | 2,0 | 2,0 | 2,0 |
| Prisma (cm/m) | 0,0 | 0,0 | 0,0 |
| **Zentrierung** | | | |
| Pupillendistanz (mm) | 63,0 | 64,0 | 64,0 |
| Hornhaut-Scheitel-Abstand (mm) | 15,0 | 13,0 | 13,0 |
| Vorneigung (Grad) | 8,0 | 7,0 | 7,0 |
| Augendrehpunktabsta nd (mm) | 28,5 | 26,5 | 26,5 |
| **Stempelpunkte** | | | |
| Fernbezugspunkt (x,y) | (0,0, 8,0) | (0,0, 8,0) | (0,0, 8,0) |
| Zentrierpunkt (x,y) | (0,0, 4,0) | (0,0, 4,0) | (0,0, 4,0) |
| Nahbezugspunkt (x,y) | (-2,5, -14,0) | (-2,5, -14,0) | (-2,5, -14,0) |
| Prismenbezugspunkt (x,y) | (0,0, 0,0) | (0,0, 0,0) | (0,0, 0,0) |

(fortgesetzt)

| Material | | | |
|---|---|---|---|
| Name | Perfalit 1,5 | Perfalit 1,6 | Perfalit |
| Brechungsindex n | 1,502 | 1,597 | 1,502 |
| **Glasdaten** | | | |
| Mittendicke d (mm) | 4,7 | 2,34 | 2,6 |
| Durchmesser (mm) | 80,0 | 65,0 | 65,0 |
| Dickenreduktionspris | 0,0 | 1,0 | 0,0 |
| ma (cm/m) | | | |

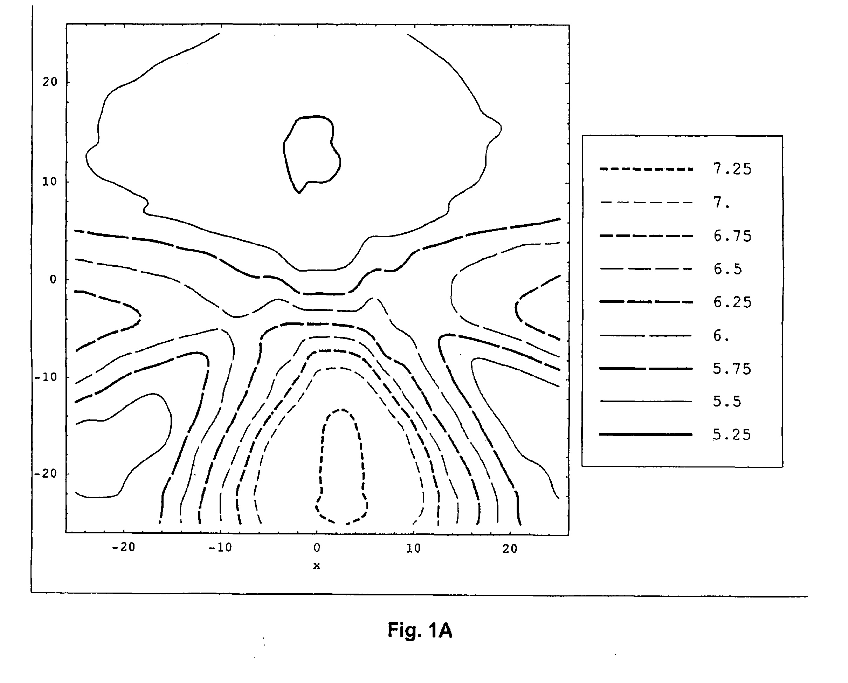

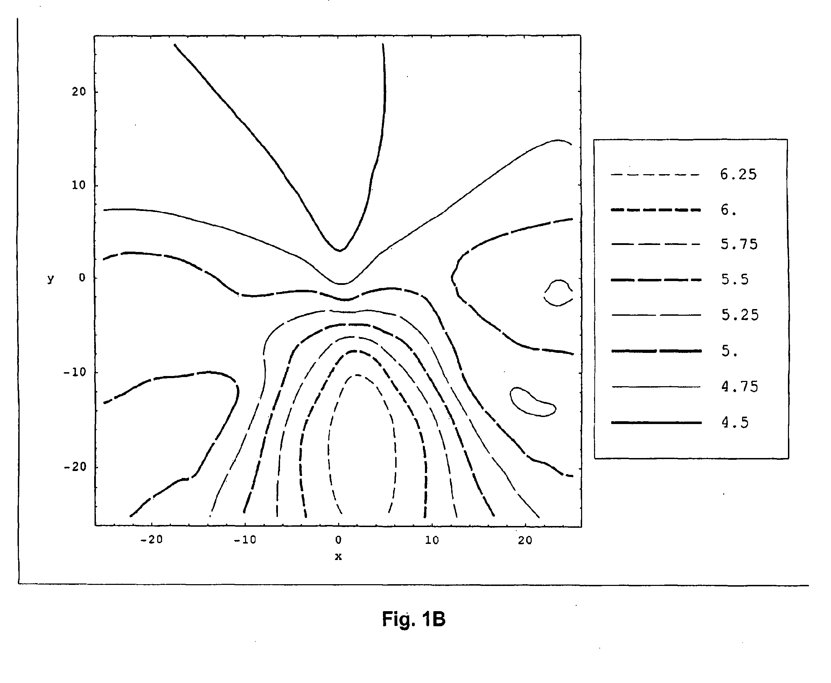

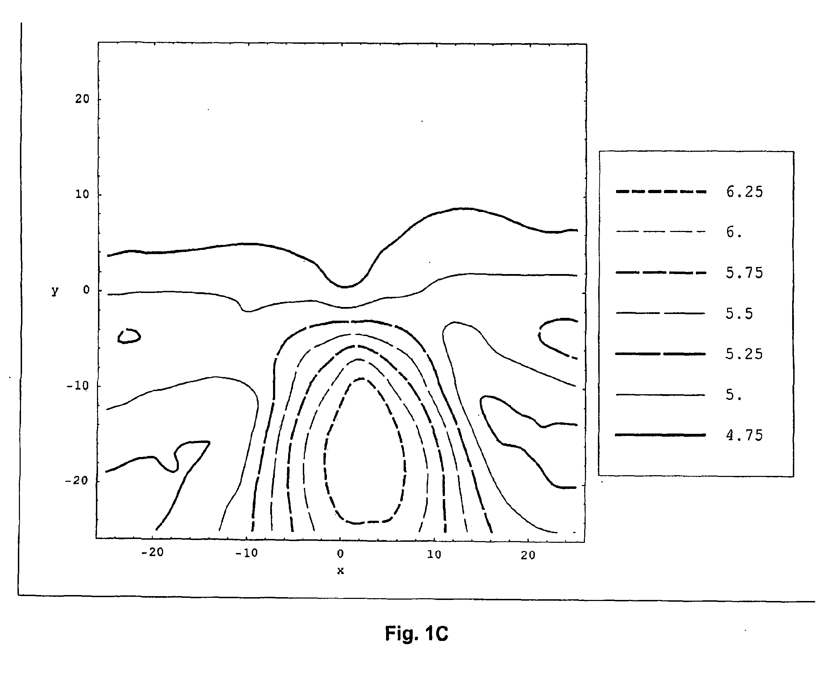

Die Brillengläser werden zunächst durch bestimmte Brechwertverteilungen charakterisiert, welche für den Stand der Technik in Fig. 1A, für das Ausführungsbeispiel 1 in Fig. 1B und für das Ausführungsbeispiel 2 in Fig. 1C dargestellt sind. Figuren 1A bis 1C zeigen die Verteilung des mittleren Flächenbrechwertes $D = (n\text{ -}1)(k_1 + k_2)/2$ der Vorderfläche als Funktion der Koordinaten $(x, y)$ in mm. Hierbei bezeichnen $n$ den Brechungsindex und $k_{1,2}$ die Hauptkrümmungen der Vorderfläche. Die Verteilung des mittleren Flächenbrechwertes ist als Iso- bzw. Höhenlinien des gleichen Wertes in einem Abstand von 0,25 dpt dargestellt.

Wie aus den Figuren 1A bis 1C ersichtlich, ist die Zunahme des Flächenbrechwertes von 4,5 dpt im Fernsichtteil bis auf 6,25 dpt im Nahsichtteil bei den Brillengläser gemäß der Erfindung geringer als bei dem Brillenglas gemäß dem Stand der Technik, welcher eine Zunahme von 5,25 dpt auf 7,25 dpt aufweist, so daß auch der Flächenastigmatismus der Vorderfläche kleiner als jener des Standes der Technik ist. Ein Vorteil der Erfindung besteht darin, daß diese, zusammen mit der sphärischen Rückfläche, dieselbe Addition in Gebrauchstellung von 2,0 dpt erreicht wie der Stand der Technik, ohne daß aber der Astigmatismus in Gebrauchsstellung durch die Hinzunahme der Rückfläche dieselben hohen Werte erreicht wie der Stand der Technik. Insbesondere wird aufgrund des schrägen Strahlendurchgangs die Addition in Gebrauchsstellung von 2,0 dpt erreicht auch wenn die Zunahme des Flächenbrechwerts der Vorderfläche unter 2,0 dpt liegt. Der maximale Gebrauchswert des Astigmatismus der Brillengläser gemäß der Erfindung liegt bei 2,41 dpt für Ausführungsbeispiel 1 und 2,53 dpt für Ausführungsbeispiel 2, im Vergleich zu 2,92 dpt beim Stand der Technik.

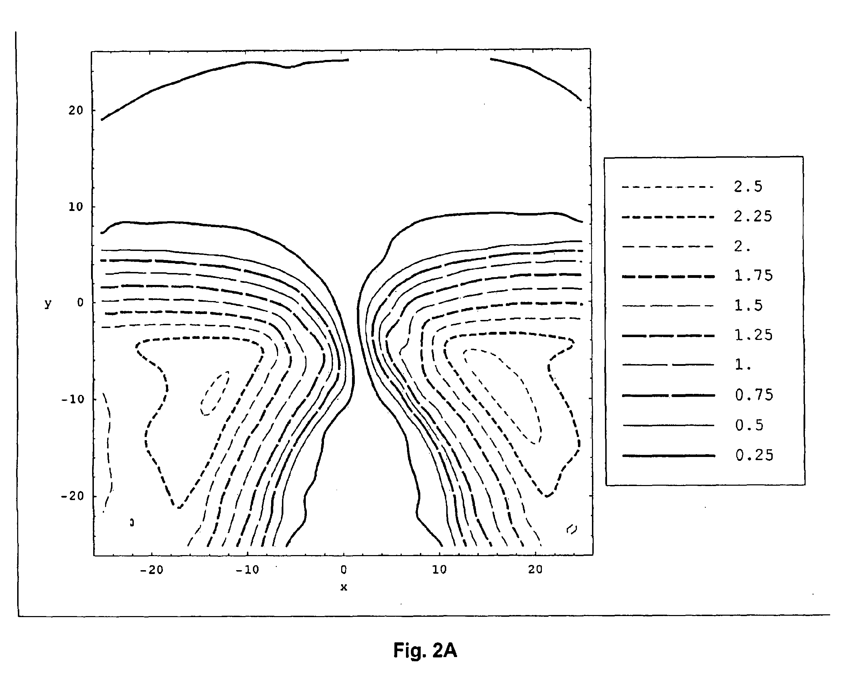

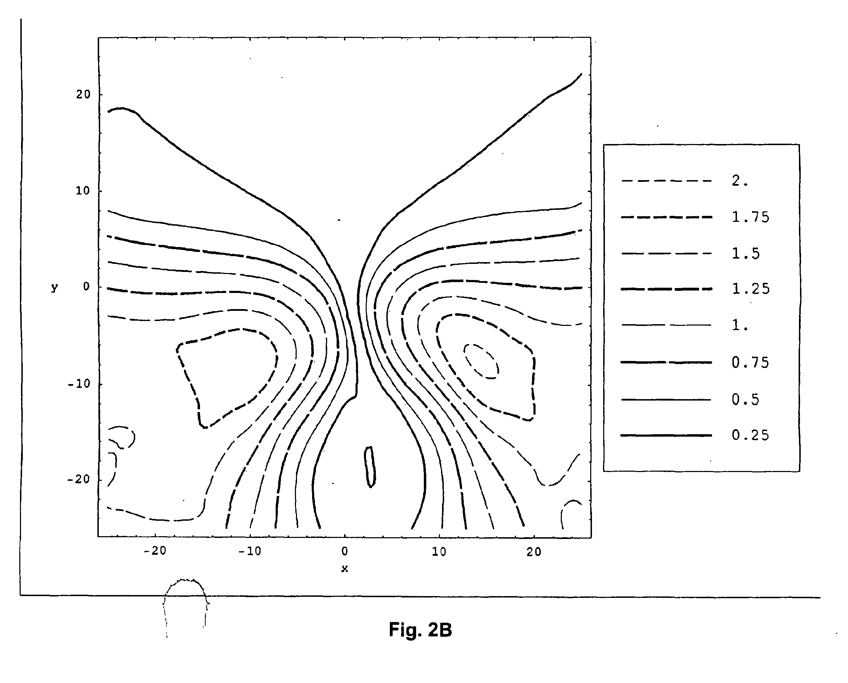

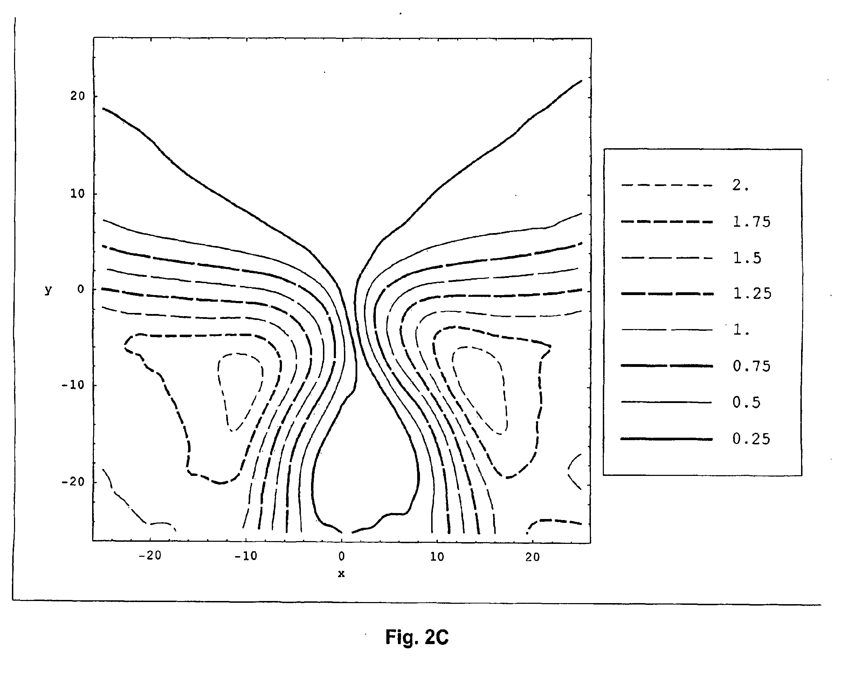

Figuren 2A bis 2C stellen den Verlauf des Betrages des Flächenastigmatismus der Vorderfläche entsprechend Gleichung (3) als Funktion der Koordinaten $(x,y)$ in mm dar, wobei Fig. 2A den Stand der Technik, Fig. 2B Ausführungsbeispiel 1 und Fig. 2C Ausführungsbeispiel 2 zeigt. Der Verlauf des Betrages des Flächenastigmatismus ist durch Isolinien in einem Abstand von 0,25 dpt dargestellt. Sämtliche Information, die man durch eine Betrachtung des Betrages des Astigmatismus $|\vec{A}|$ gewinnen kann, können aus den Figuren 2A bis 2C entnommen werden.

Wie aus Fig. 2A ersichtlich, nimmt im Stand der Technik der Betrag des Flächenastigmatismus entsprechend Gleichung (3) einen Wert von maximal 2,62 dpt an. Im Vergleich dazu betragen die Maximalwerte des Flächenastigmatismus 2,04 dpt für Ausführungsbeispiel 1 (Fig. 2B) und 2,16 dpt für Ausführungsbeispiel 2 (Fig. 2C) der Erfindung.

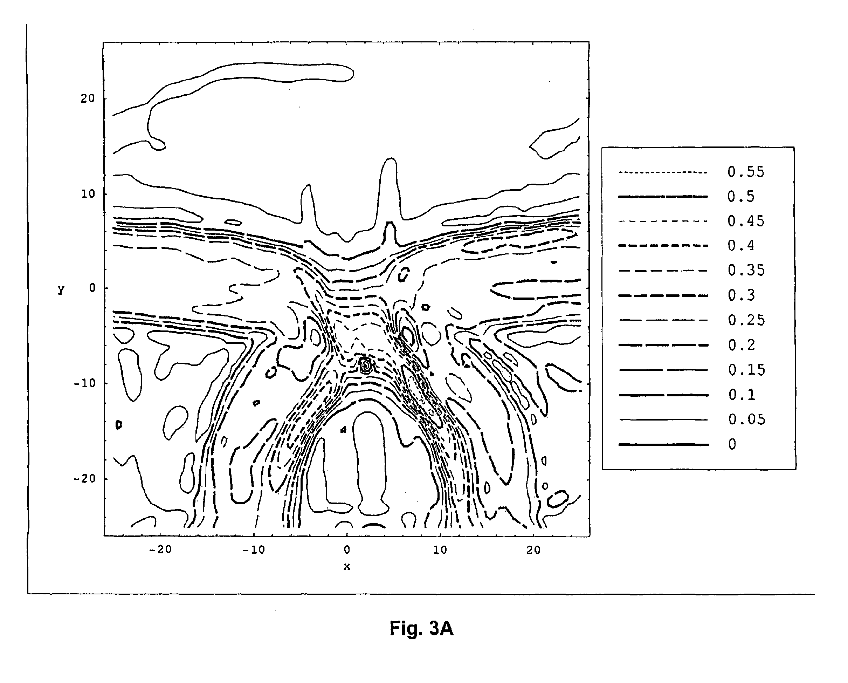

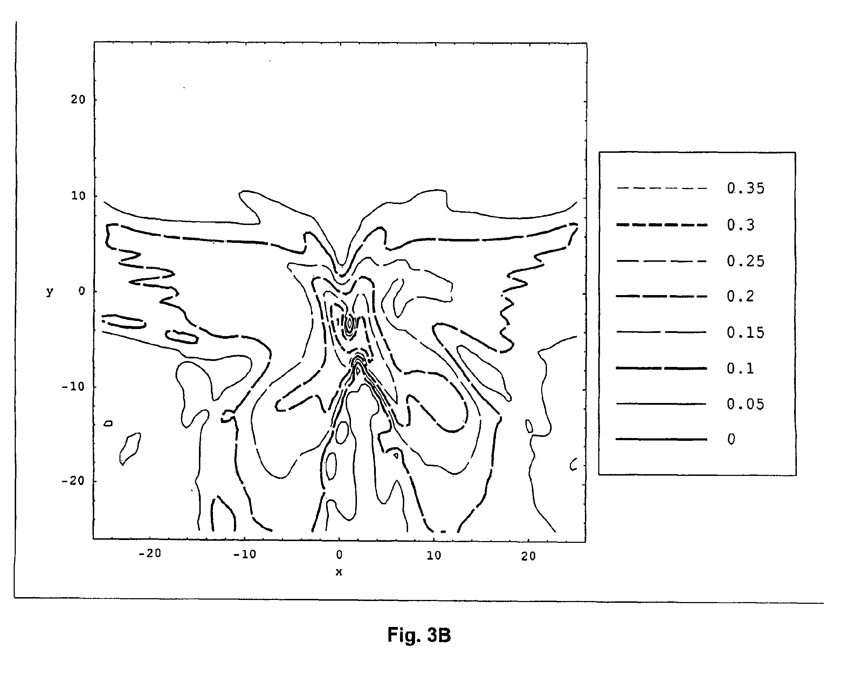

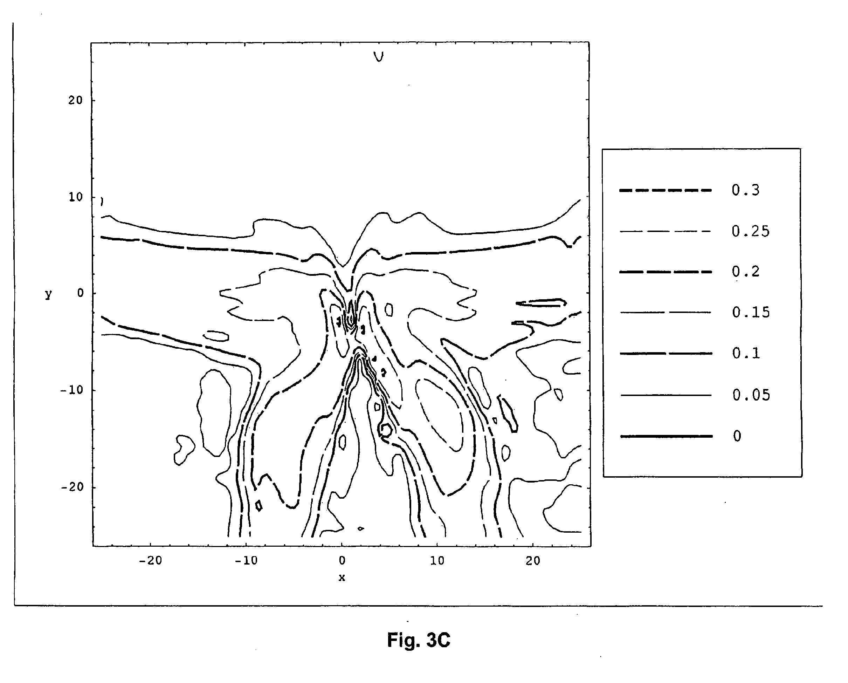

Fig. 3A bis 3C zeigen die Verteilung des Gradienten $|grad(|\vec{A}|)|$ in dpt/mm des Betrages des Astigmatismus der Vorderfläche als Funktion der Koordinaten $(x, y)$ in mm für den Stand der Technik (Fig. 3A), für Ausführungsbeispiel 1 (Fig. 3B) und für Ausführungsbeispiel 2 (Fig. 3C). Die Verteilung des Gradienten ist durch Isolinien in einem Abstand von 0,05 dpt/mm dargestellt.

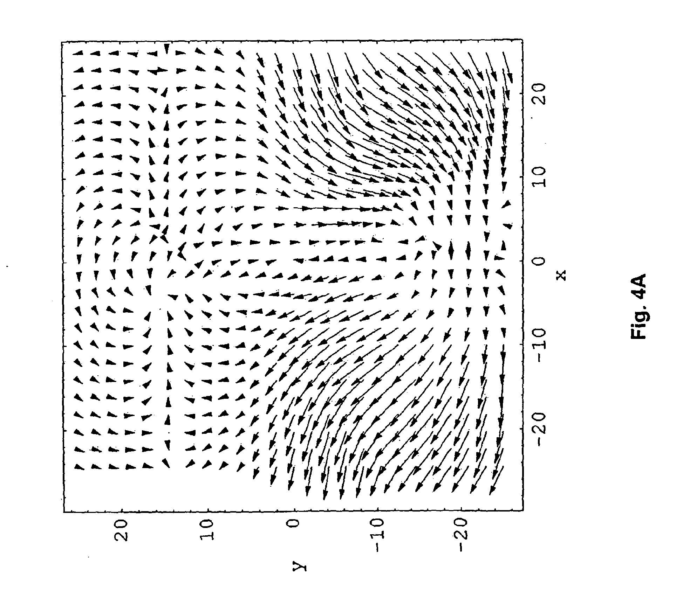

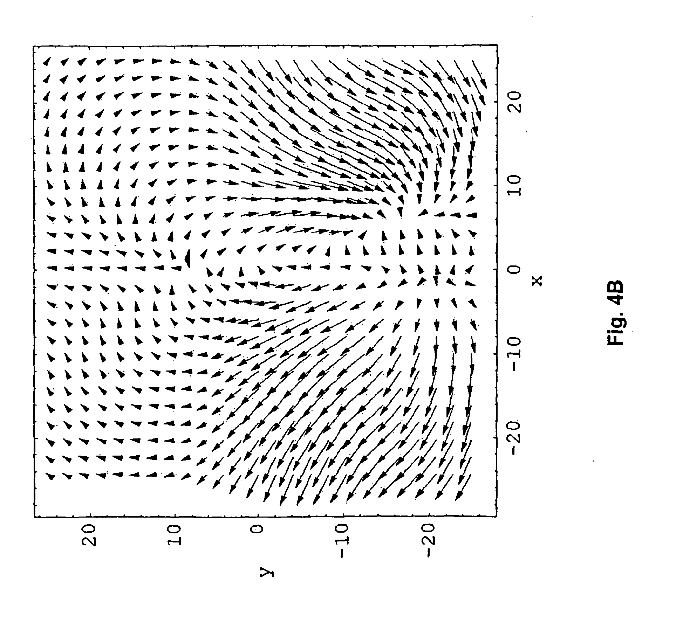

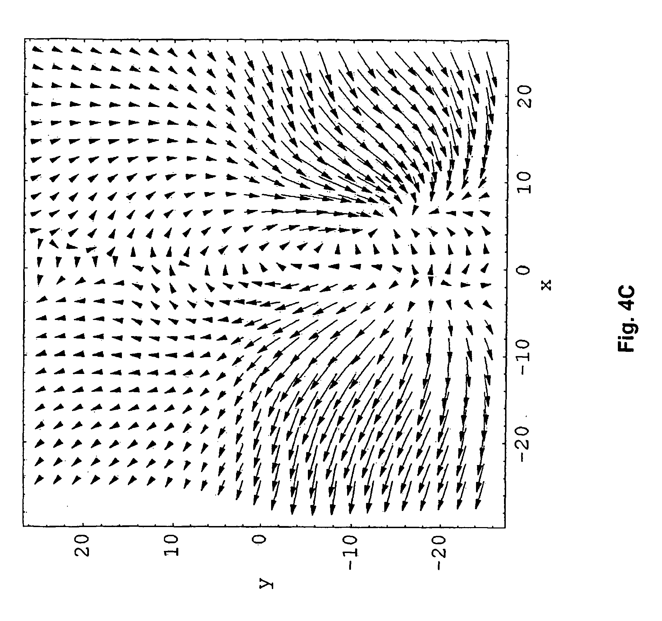

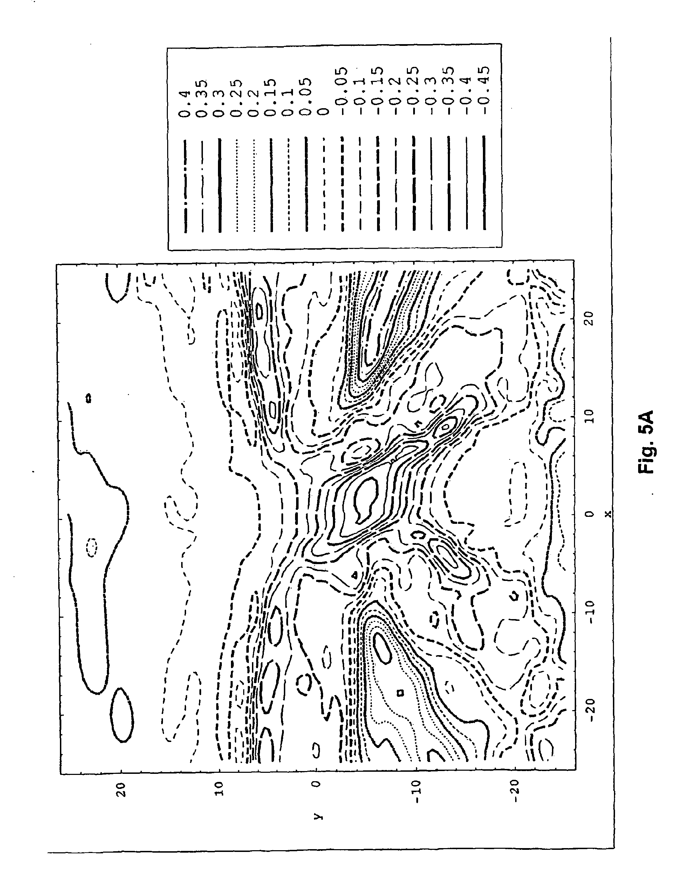

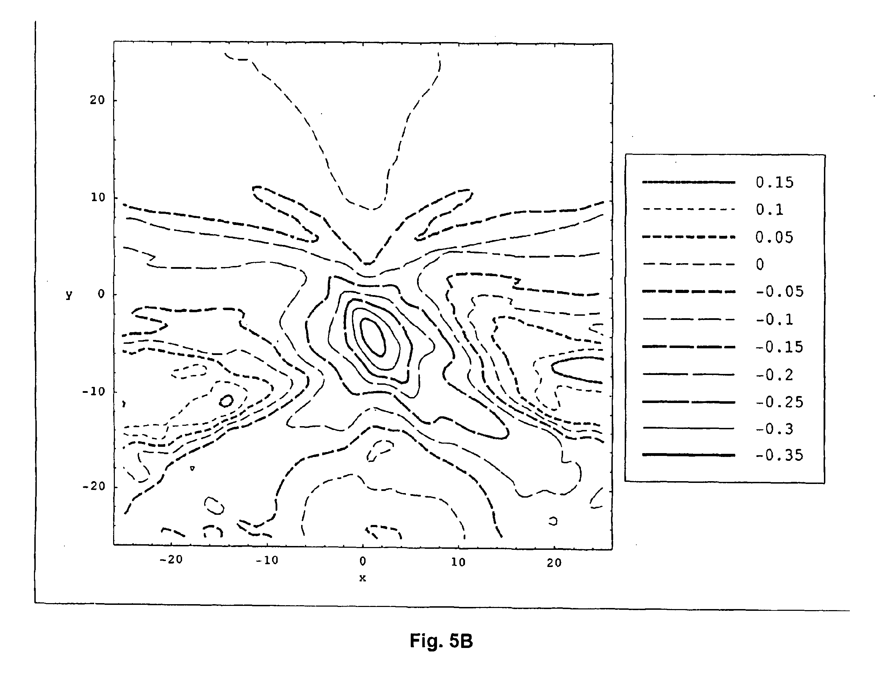

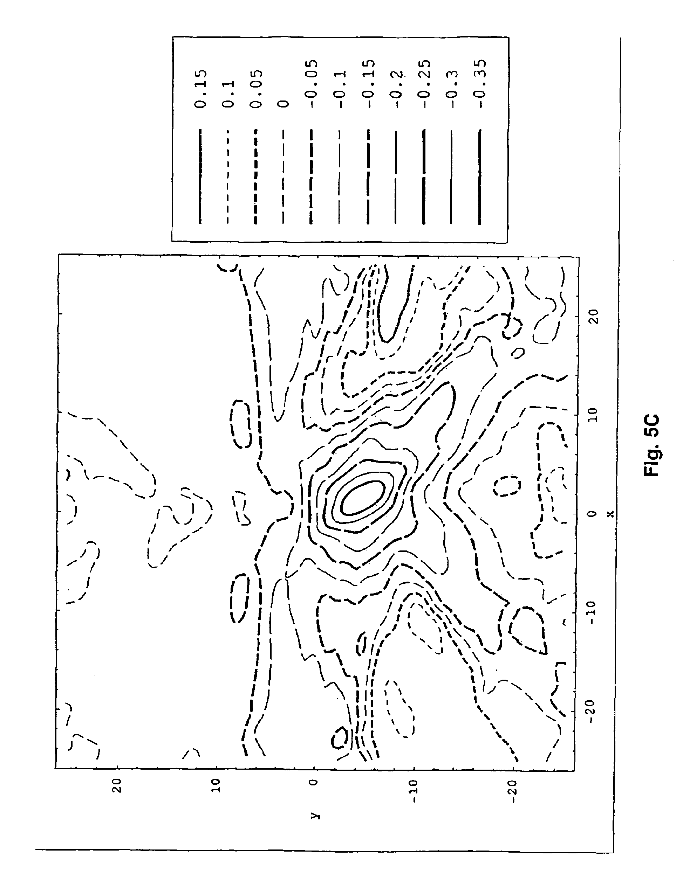

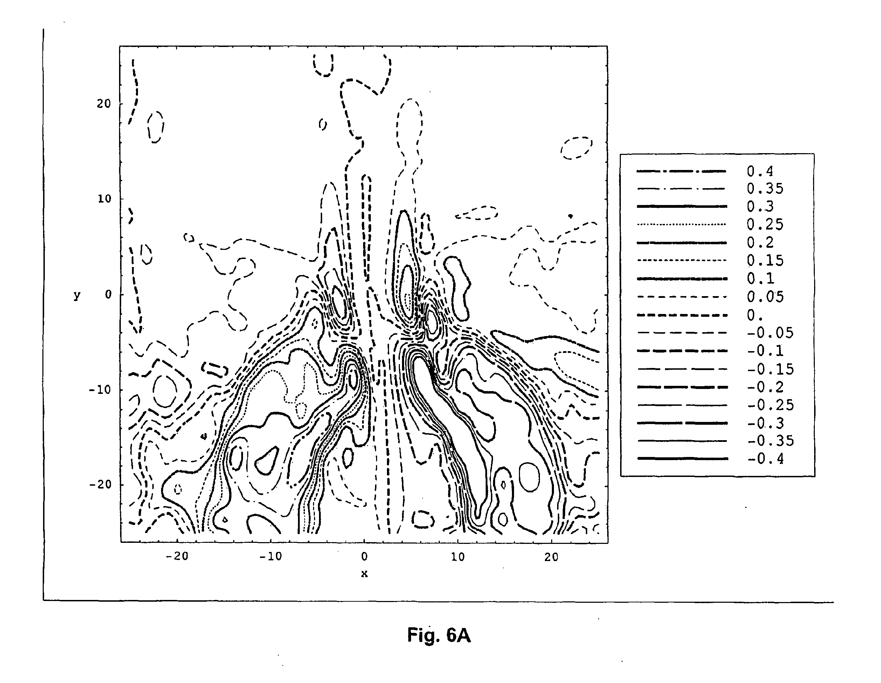

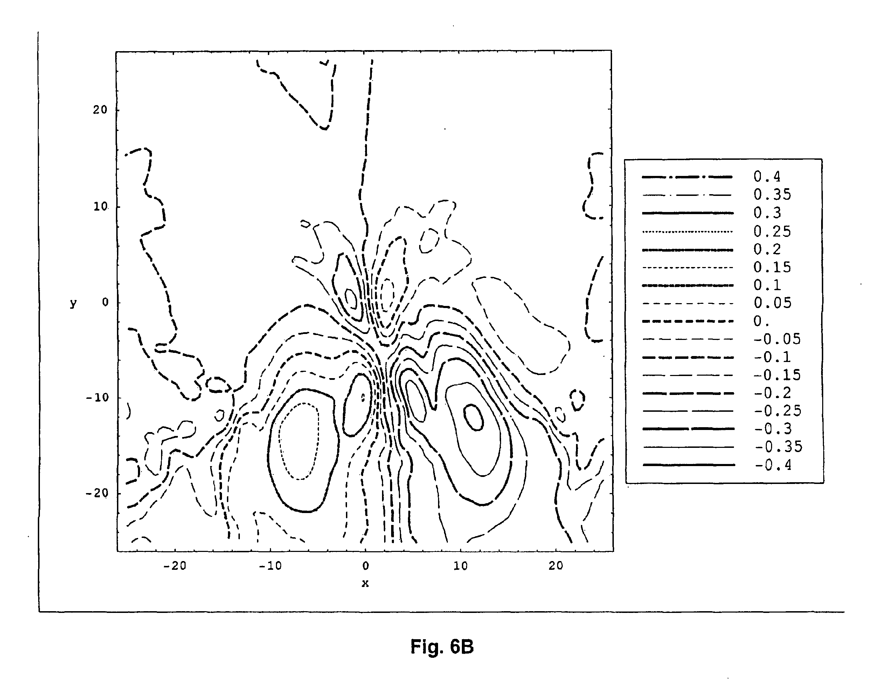

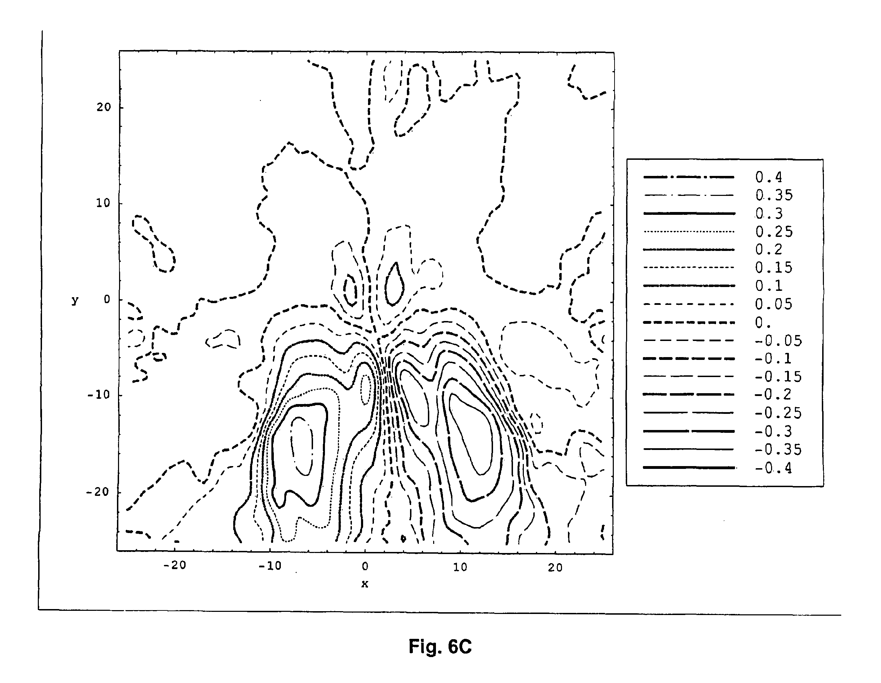

Im Vergleich zur Verteilung des Betrages des Astigmatismus, welche in Fig. 2A bis 2C dargestellt ist, enthält eine Darstellung der Verteilung des gesamten Vektorfeldes $\vec{A}$ des Astigmatismus zusätzlich auch die Richtungsinformationen. Fig. 4A bis 4C stellen das Vektorfeld des Flächenastigmatismus der Vorderfläche als Funktion der Koordinaten $(x,y)$ in mm für den Stand der Technik (Fig. 4A), Ausführungsbeispiel 1 (Fig. 4B) und Ausführungsbeispiel 2 (Fig. 4C) dar. Entsprechend stellen Fig. 5A bis 5C die Verteilung der Rotation des Astigmatismus $rot\vec{A}$ in dpt/mm als Funktion der Koordinaten $(x, y)$ in mm für den Stand der Technik (Fig. 5A), für Ausführungsbeispiel 1 (Fig. 5B) und für Ausführungsbeispiel 2 (Fig. 5C) durch Isolinien dar. Fig. 6A bis 6C stellen die Verteilung der Divergenz $div\vec{A}$ in dpt/mm als Funktion der Koordinaten $(x,y)$ in mm für den Stand der Technik (Fig. 6A), Ausführungsbeispiel 1 (Fig. 6B) und Ausführungsbeispiel 2 (Fig. 6C) als Isolinien dar. Aus Fig. 4A ist für den Stand der Technik ersichtlich, daß die Vektorpfeile des Astigmatismus $\vec{A}$ im Gebiet um $(x,y) = (20,-6)$ mm alle ungefähr dieselbe Länge aufweisen, aber stark in ihrer Richtung variieren. Diese Variation aber kann anhand von der Darstellung des Betrages des Astigmatismus $|\vec{A}|$ gar nicht wahrgenommen werden. Zum Beispiel nimmt die Größe des Gradienten des Betrages $|grad(|\vec{A}|)|$ im Gebiet um $(x, y) = (20,-6)$, wie in Fig. 3A gezeigt, Werte an, welche nicht über 0,1 dpt/mm liegen. Die starken Variationen des Astigmatismus $\vec{A}$ werden erst durch die Größe der Rotation des Astigmatismus $rot\vec{A}$, welche einen Wert von über 0,4 dpt/mm annimmt, sichtbar, wie zum Beispiel in Fig. 5A gezeigt. Im Vergleich dazu liegt die Größe der Rotation des Astigmatismus $rot\vec{A}$ im gleichen Gebiet ($x$,$y$)=($20$,-$6$) für Ausführungsbeispiel 1 (Fig. 5B) und für Ausführungsbeispiel 2 (Fig. 5C) der Erfindung nur in einer Größenordnung von 0,15 dpt/mm.

Weitere quantitative Merkmale der Divergenz $div\vec{A}$ und der Rotation $rot\vec{A}$ des Astigmatismus der Brillengläser gemäß der Ausführungsbeispiele 1 und 2, sowie dem Stand der Technik, werden im folgenden anhand von Horizontalschnitten ($x$ : var*iabel, y = const*) illustriert.

Dabei beziehen sich jeweils Figuren -A (7A bis 11A) auf den Stand der Technik, Figuren -B (7B bis 11 B) auf das erste Ausführungsbeispiel und Figuren -C (7C bis 11C) auf das zweite Ausführungsbeispiel.

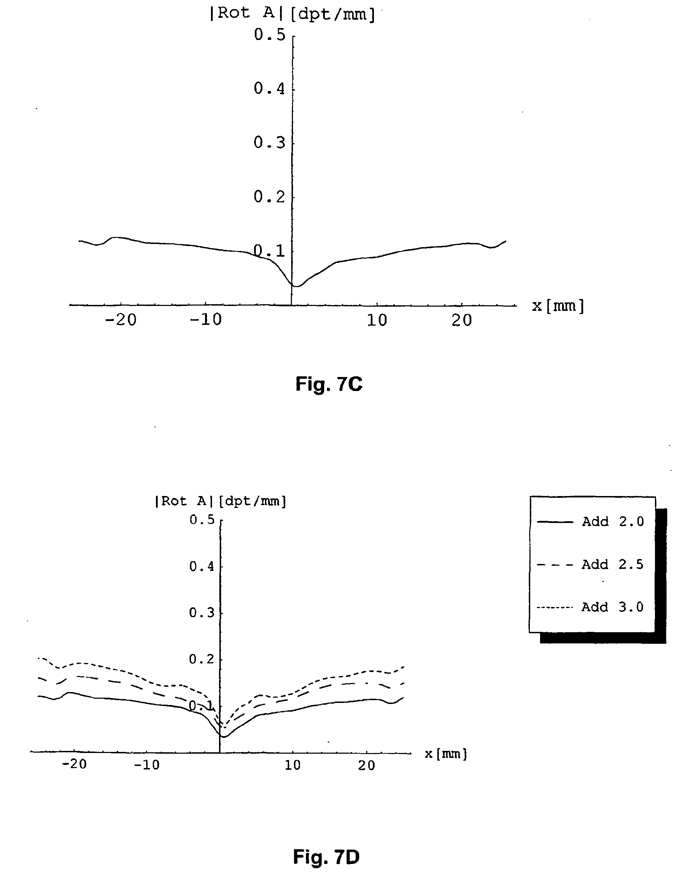

Figur 7D bezieht sich auf eine Serie mit Additionen von 2,0, 2,5 und 3,0 dpt von Vorderflächen desselben Design-Typs, wie der der Vorderfläche des Ausführungsbeispiels 2.

Figuren -D (8D bis 11D) beziehen sich auf eine Serie von Vorderflächen desselben Design-Typs, wie der der Vorderfläche des Ausführungsbeispiels 1, welche Vorderflächen sich nur durch deren Additionen in Gebrauchsstellung unterscheiden.

Die gezeigte Serie von Vorderflächen weist entsprechend Additionen von 1,0, 2,0, 2,5, 3,0 und 3,5 dpt auf.

Figuren -E (8E bis 11 E) beziehen sich auf eine Serie von Vorderflächen desselben Design-Typs, wie der der Vorderfläche des Ausführungsbeispiels 2, welche Vorderflächen sich nur durch deren Additionen in Gebrauchsstellung unterscheiden. Die gezeigte Serie von Vorderflächen weisen entsprechend Additionen von 1,0, 2,0, 2,5, 3,0 und 3.5 dpt auf.

## Positionen der Extrema von $div\vec{A}$

Die Rotation $rot\vec{A}$ und die Divergenz $div\vec{A}$ des Astigmatismus sollten bei einem guten Brillenglas so klein wie möglich gehalten werden. Da etwa $div\vec{A}$ normalerweise innerhalb des Brillenglases Extrema annimmt, ist das Design umso günstiger, je weiter außen zu der Peripherie des Brillenglases diese Extrema angenommen werden.

Im Stand der Technik weist die Divergenz des Astigmatismus $div\vec{A}$ viele eng beieinanderstehende ausgeprägte Extrema auf, wie aus Fig. 6A ersichtlich. Im Vergleich dazu ist die Verteilung der Divergenz des Astigmatismus $div\vec{A}$ für Vorderflächen gemäß der Erfindung sehr glatt (siehe Fig. 6B und 6C für Ausführungsbeispiel 1 bzw. Ausführungsbeispiel 2). Extrema nahe der Brillenglasmitte sind entweder nicht vorhanden oder kaum noch ausgeprägt. Die einzigen nennenswerten Extrema liegen deutlich außerhalb des Gebietes $y \geq$ -8$mm$. Unter "nennenswert" wird ein Extremum bezeichnet, dessen Wert dem Betrage nach über dem (0,1/mm)-fachen der Addition liegt. Im Ausführungsbeispiel 1 wird der maximale Wert des Betrages der Divergenz des Astigmatismus $|div\vec{A}|$ im Minimum bei (x,y)=(11,3, -11,9) mm angenommen und beträgt 0,31 dpt/mm. Im Ausführungsbeispiel 2 wird der maximale Wert von 0,39 dpt/mm bei ($x$, $y$) = (11,9, - 13,8) erreicht. Im Vergleich dazu beträgt der maximale Wert des Betrages der Divergenz $|div\vec{A}|$ für den Stand der Technik 0,6 dpt/mm und wird deutlich näher an der Brillenglasmitte im Punkt ($x$, $y$) = (6,1, -8,3) angenommen.

Die Eigenschaft, daß innerhalb des Gebietes $y \geq$ -8$mm$ keine (oder keine nennenswerten) Extrema der Divergenz des Astigmatismus $div\vec{A}$ liegen, trifft für alle Additionen des Designs der Erfindung zu, die in der Serie 1,0, 2,0, 2,5, 3,0, 3,5 dpt liegen (siehe Tabelle 2A und Tabelle 2B). Tabelle 2A zeigt die Positionen der Extrema (Maximum und Minimum) der Divergenz des Astigmatismus $div\vec{A}$ für ein Brillenglas gemäß Ausführungsbeispiel 1 der Erfindung und Tabelle 2B für ein Brillenglas gemäß Ausführungsbeispiel 2 der Erfindung. In dieser Serie ab Addition 2,0 ist sogar das Gebiet $y \geq$ -9$mm$ frei von Extrema.

Tabelle 2A:

| Addition | Minimum[dpt/mm]/Position(x,y)[mm] | Maximum[dpt/mm]/Position(x,y)[mm] |
|---|---|---|
| 1,0 | -0,181/(6,0, -9,4) | 0,171/(-1,5, -9,1) |
| 2,0 | -0,309/(11,3, -11,9) | 0,287/(-7,0, -13,4) |
| 2,5 | -0,373/(11,5, -12,1) | 0,344/(-7,0, -13,6) |
| 3,0 | -0,440/(12,0, -11,8) | 0,406/(-7,0, -13,9) |
| 3,5 | -0.502/(12,8, -12,0) | 0,452/(-6,3, -14,0) |

Tabelle 2B:

| Addition | Minimum[dpt/mm]/ Position(x,y)[mm] | Maximum[dpt/mm]/Posltion(x,y)[mm] |
|---|---|---|
| 1,0 | -0.191/(5.0, -8,4) | 0,164/(-3,0, -13,0) |

(fortgesetzt)

| Addition | Minimum[dpt/mm]/ Position(x,y)[mm] | Maximum[dpt/mm]/Posltion(x,y)[mm] |
|---|---|---|
| 2,0 | -0,386/(11,9, -13,8) | 0,372/(-6,7, -14,5) |
| 2,5 | -0,508/(10,9, -13,4) | 0,486/(-6,5, -15,2) |
| 3,0 | -0,668/(11,0, -13,8) | 0,590/(-5,4, -15,6) |
| 3,5 | -0,808/(10,2, -12,0) | 0,712/(-3,8, -15,5) |

**Monotonie des Betrages der Rotation des Astigmatismus $|rot\vec{A}|$ im Horizontalschnitt**

Variationen der Rotation des Astigmatismus $|rot\vec{A}|$ nahe der Brillenglasmitte sind besonders störend. Daher ist ein Brillenglas mit einem verschwindend kleinen Wert von $|rot\vec{A}|$ bei $x = 0mm$ und einem möglichst langsamen und gleichmäßigen Anstieg in Richtung endlicher $x$-Werte wünschenswert.

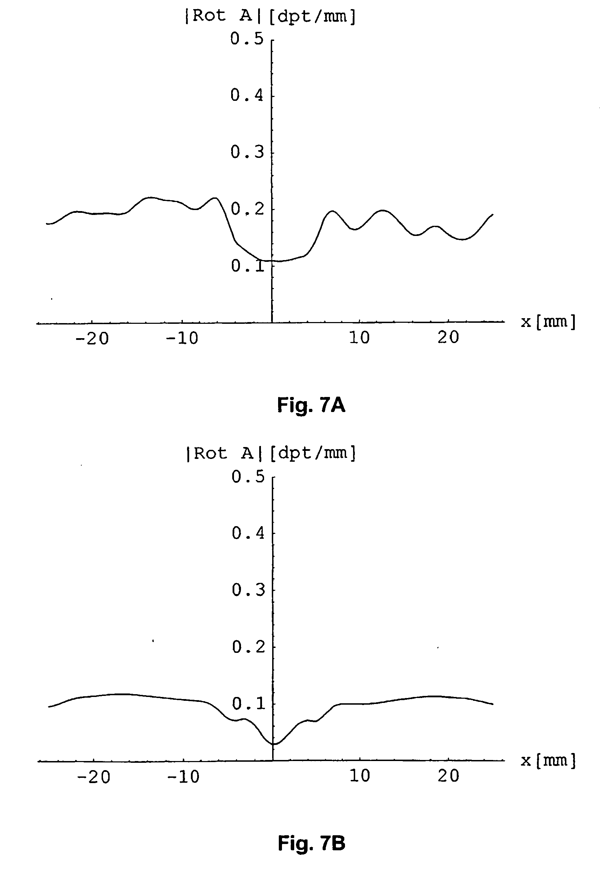

Insbesondere existiert im Femteil für die Brillengläser gemäß der Erfindung im Gegensatz zum Stand der Technik ein Horizontalschnitt, entlang dessen der Anstieg von $|rot\vec{A}|$ monoton über einen Bereich ist, der mindestens $|x| \leq 16mm$ umfaßt. Die genaue Position des Horizontalschnitts ist designabhängig und variiert zwischen $y = 3mm$ und $y = 5mm.$ Da die Brillengläser gemäß der Erfindung (Ausführungsbeispiel 1 und Ausführungsbeispiel 2) und gemäß dem Stand der Technik unterschiedliche Designs aufweisen, befindet sich der Horizontalschnitt für Ausführungsbeispiel 1 bei $y = 4,8mm$ (Fig. 7B), für Ausführungsbeispiel 2 bei $y = 3mm$ (Fig. 7C) und der entsprechende Horizontalschnitt für den Stand der Technik bei $y = 3mm$ (Fig. 7A).

Fig. 7B zeigt einen Horizontalschnitt des Betrags der Rotation des Astigmatismus $|rot\vec{A}|$ für Ausführungsbeispiel 1 der Erfindung $y = 4,8mm$ im Vergleich zu dem entsprechenden für den Stand der Technik (Fig. 7A). Für ein erfindungsgemäßes Brillenglas des Ausführungsbeispiels 1 ist der Wert von $|rot\vec{A}|$ bei $x = 0mm$ auf 30% des vorher erreichten Wertes gesunken (Fig. 7B), und der Anstieg für endliche x-Werte ist langsam und monoton im ganzen Bereich $|x| \leq 16mm$, wohingegen der Stand der Technik im selben Bereich starke Schwankungen und mehrere Extrema aufweist.

Für das Brillenglas gemäß dem Ausführungsbeispiel 2 der Erfindung ist der Bereich der Monotonie sogar bei $y = 3mm$ lokalisiert, also näher an der Brillenglasmitte, und die Monotonie erstreckt sich sogar auf den Bereich $|x| \leq 20mm$ wie in Fig. 7C gezeigt.

Auch wenn die Größe des Betrages der Rotation des Astigmatismus $|rot\vec{A}|$ von der Addition abhängt, bleibt das Merkmal der Monotonie, zumindest für Ausführungsbeispiel 2, im Bereich $|x| \leq 20mm$ für mehrere Additionen fast unverändert erhalten. Außer für Addition 2,0 erfüllt das Design der Erfindung für Ausführungsbeispiel 2 innerhalb der Serie mit Additionen 1,0, 2,0, 2,5, 3,0, 3,5 dpt auch für Addition 2,5 dpt die Forderung der Monotonie und auch für Addition 3,0 weist die Abhängigkeit $|rot\vec{A}|$ keine nennenswerten Extrema im Bereich $|x| \leq 20mm$ auf wie aus Fig. 7D ersichtlich.

**Extremwerte der Rotation und der Divergenz des Astigmatismus**

Im folgenden wird die Erfindung mit dem Stand der Technik in Bezug auf Maximalwerte verglichen, die der Betrag der Rotation $|rot\vec{A}|$ und die Divergenz $div\vec{A}$ des Astigmatismus längs charakteristischer Horizontalschnitte ($x, y$ = $const$.) annehmen.

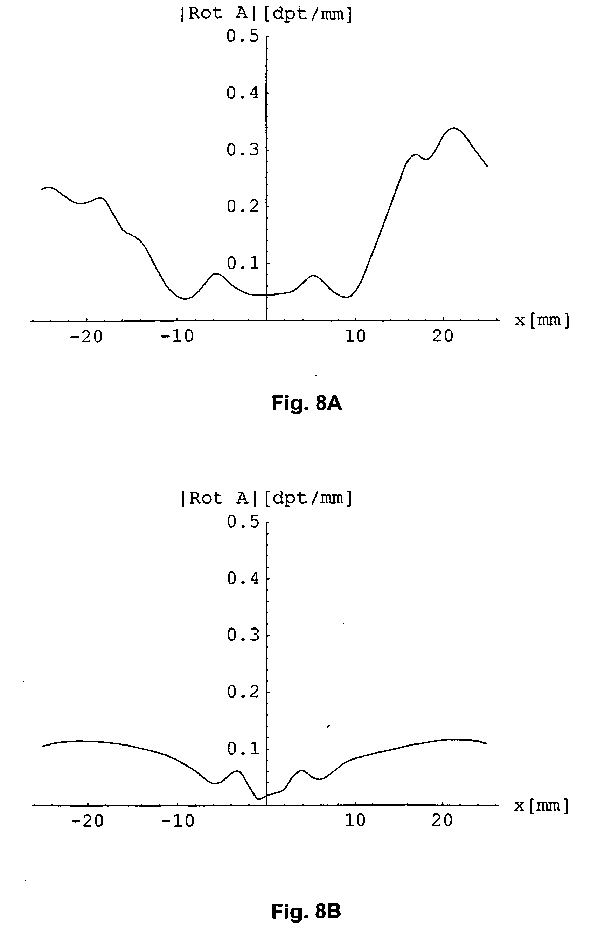

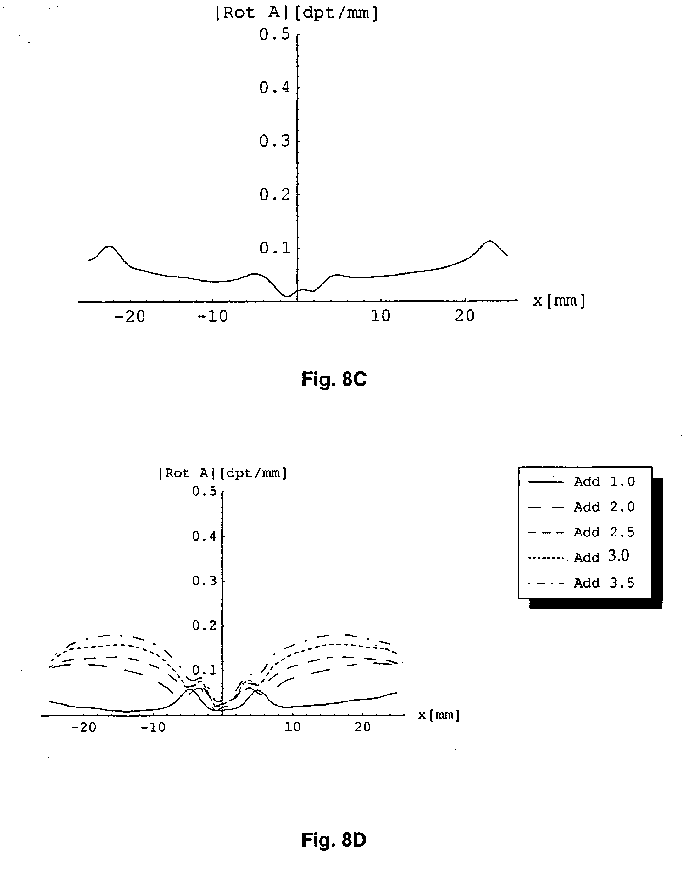

Fig. 8A bis 8D zeigen den Verlauf des Betrages der Rotation des Astigmatismus in dpt/mm im Horizontalschnitt bei $y = +6mm.$ Wie in Fig. 8A gezeigt, schwankt der Betrag der Rotation des Astigmatismus $|rot\vec{A}|$ im Horizontalschnitt bei $y = +6mm$ für den Stand der Technik stark und nimmt im Maximum Werte von über 0,3 dpt/mm an. Im Vergleich beträgt der Betrag der Rotation des Astigmatismus $|rot\vec{A}|$ im Falle der Erfindung für Ausführungsbeispiel 1 nahe der Hauptlinie unter 0,03 dpt/mm und wächst auch auf dem ganzen Horizontalschnitt nicht über 0,12 dpt/mm, wie in Fig. 8B gezeigt. Für Ausführungsbeispiel 2 unterschreitet $|rot\vec{A}|$ nahe der Hauptlinie ebenso den Wert von 0,03 dpt/mm und steigt auch auf dem ganzen Horizontalschnitt nicht über 0,12 dpt/mm, wie in Fig. 8C gezeigt.

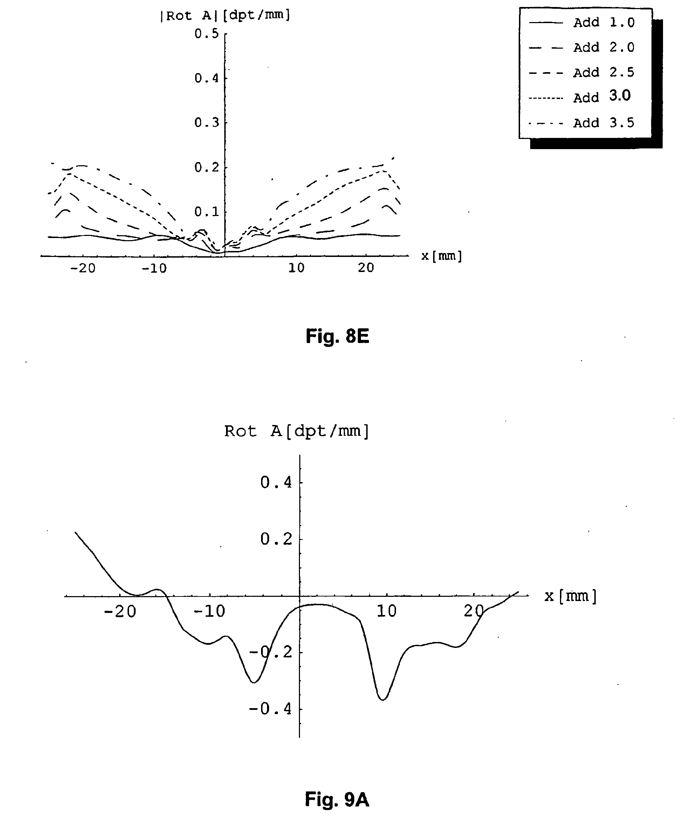

Die Größe $|rot\vec{A}|$ skaliert in etwa linear mit der Addition, wie Fig. 8D (Ausführungsbeispiel 1) und Fig. 8E (Ausführungsbeispiel 2) für eine Serie von Brillengläsern mit Additionen von 1,0, 2,0, 2,5, 3,0, 3,5 dpt zeigen. Insbesondere skaliert der Wert des Maximums linear, und zwar für Ausführungsbeispiel 1 nach der Abhängigkeit

$$|rot\vec{A}|_{max} \approx 0,06 \text{ Addition/dpt} * \text{dpt/mm}$$

und für Ausführungsbeispiel 2 nach der Abhängigkeit

$$|\,rot\vec{A}\,|_{max} \approx 0{,}07\ \text{Addition/dpt} * \text{dpt/mm}\,.$$

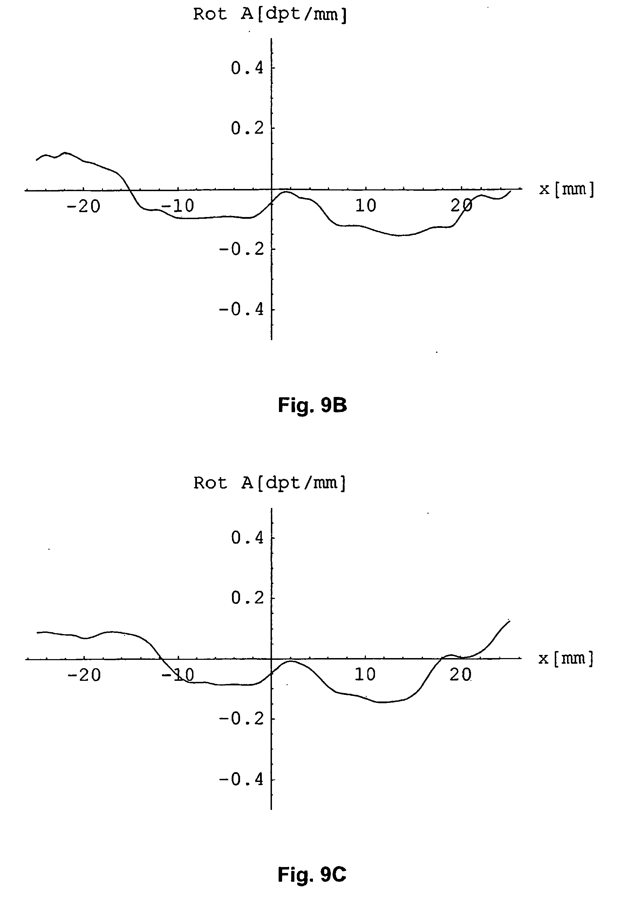

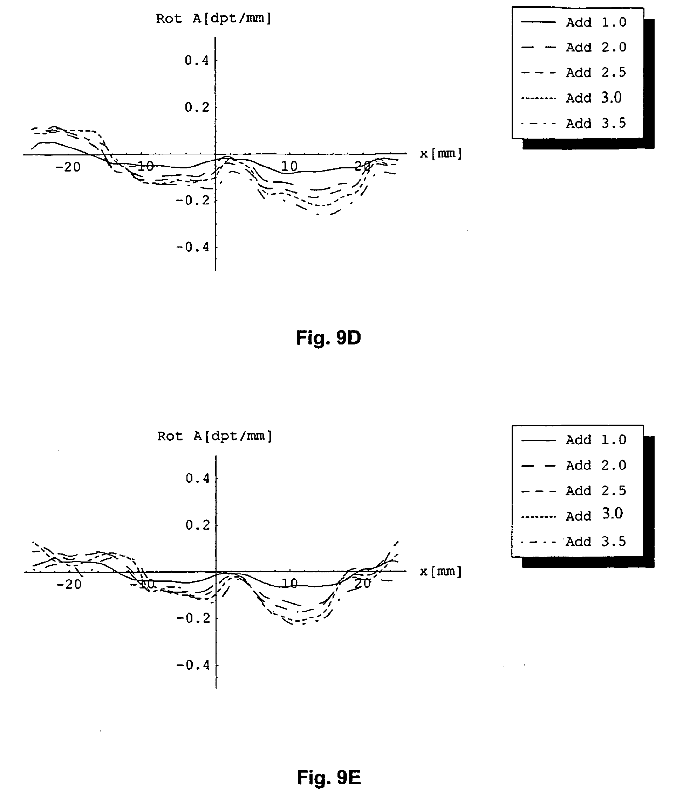

Figuren 9A bis 9E zeigen den Verlauf des Betrages der Rotation des Astigmatismus $|rot\vec{A}|$ in dpt/mm im Schnitt bei $y = -14mm$. Figuren 9A bis 9C zeigen den Verlauf von $|rot\vec{A}|$ für ein Brillenglas mit Addition von 2,0 dpt nach dem Stand der Technik (Fig. 9A), nach Ausführungsbeispiel 1 (Fig. 9B) und nach Ausführungsbeispiel 2 (Fig. 9C). Fig. 9D (Ausführungsbeispiel 1) und 9E (Ausführungsbeispiel 2) zeigen den Verlauf von $|rot\vec{A}|$ für eine Serie von Brillengläser mit Additionen von 1,0, 2,0, 2,5, 3,0, 3,5 dpt.

Der Verlauf von $|rot\vec{A}|$ in Fig. 9A ist durch deutlich ausgeprägte Maxima mit Werten von über 0,5 dpt/mm und steilen Flanken charakterisiert, der Verlauf in Fig. 9B dagegen durch schwach ausgeprägte Maxima mit Werten unter 0,17 dpt/mm. Das gleiche gilt für den Verlauf in Fig. 9C, wobei die Maxima Werte unter 0,16 dpt/mm aufweisen. Ferner ist der Verlauf bei negativen $x$-Werten fast plateauartig.

Wie aus Figuren 9A bis 9C ersichtlich, schwankt $rot\vec{A}$ für den Stand der Technik sehr viel stärker als im Fall der Erfindung. Die Größe $rot\vec{A}$ skaliert auch bei $y = -14mm$ in etwa linear mit der Addition, wie Fig. 9D und Fig. 9E für einer Serie von Brillengläser, gemäß Ausführungsbeispiel 1 bzw. Ausführungsbeispiel 2 mit verschieden Additionen zeigen. Insbesondere skaliert der Wert des Maximums linear, und zwar für Ausführungsbeispiel 1 nach der Abhängigkeit

$$|\,rot\vec{A}\,|_{max} \approx 0{,}08\ \text{Addition/dpt} * \text{dpt/mm}$$

sowie für Ausführungsbeispiel 2 entsprechend

$$|\,rot\vec{A}\,|_{max} \approx 0{,}07\,\text{Addition/dpt} * \text{dpt/mm}\,.$$

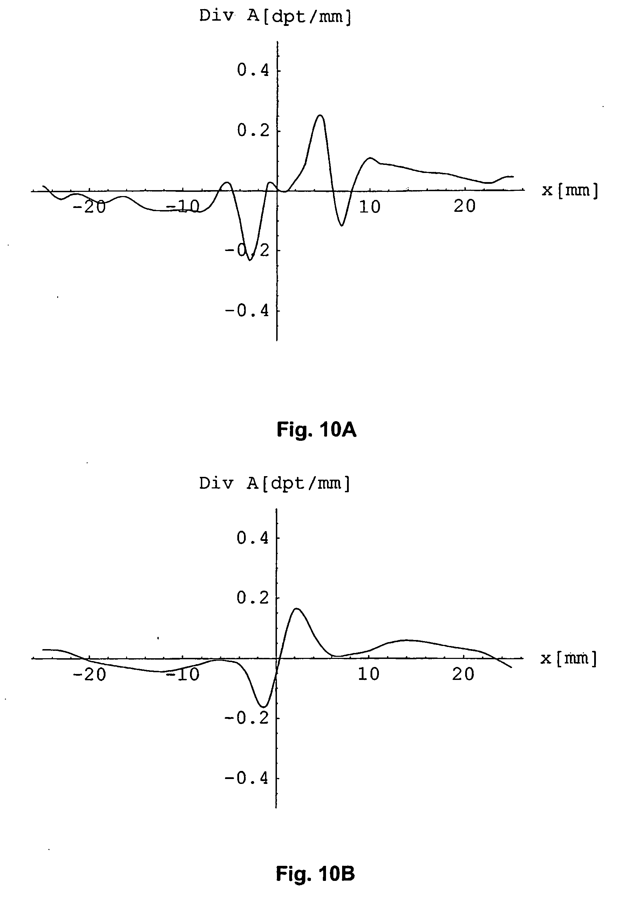

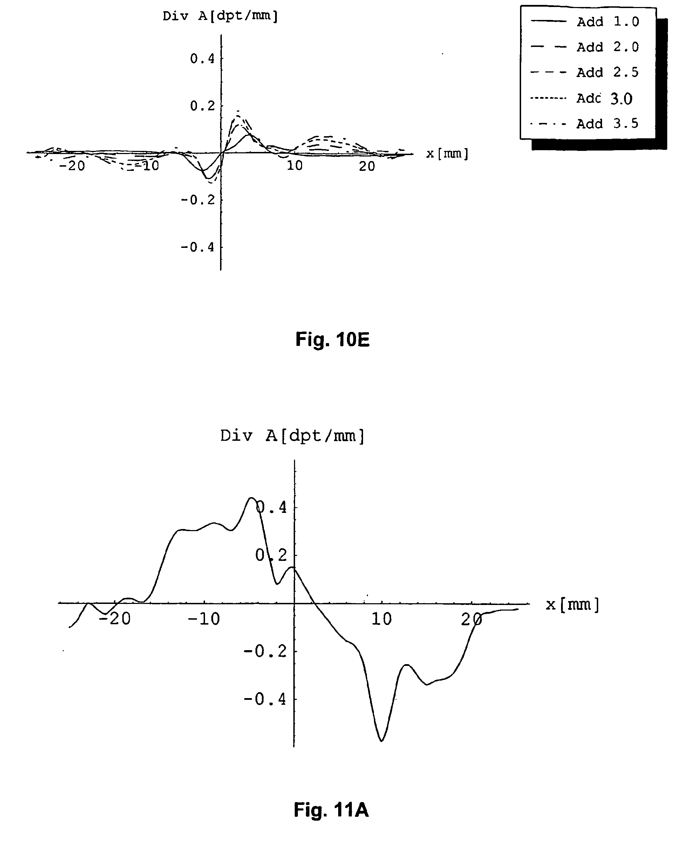

Figuren 10A bis 10E zeigen den Verlauf der Divergenz des Astigmatismus $div\vec{A}$ in dpt/mm im horizontalen Schnitt bei $y = 0mm$. Wie aus Fig. 10A ersichtlich ist der Verlauf durch deutlich ausgeprägte und mit steilen Flanken versehene Maxima und Minima von $div\vec{A}$ mit Werten über 0,25 dpt/mm bzw. unter -0,25 dpt/mm charakterisiert. Dagegen hat das Maximum von $div\vec{A}$ einen Wert kleiner als 0,18 dpt/mm und das Minimum einen Wert größer als -0,18 dpt/mm für Ausführungsbeispiel 1. Ausführungsbeispiel 2 zeigt sogar kleinere Werte für das Maximum und das Minimum. Das Maximum von $div\vec{A}$ in Ausführungsbeispiel 2 ist kleiner als 0,11 dpt/mm und das Minimum größer als -0,11 dpt/mm.

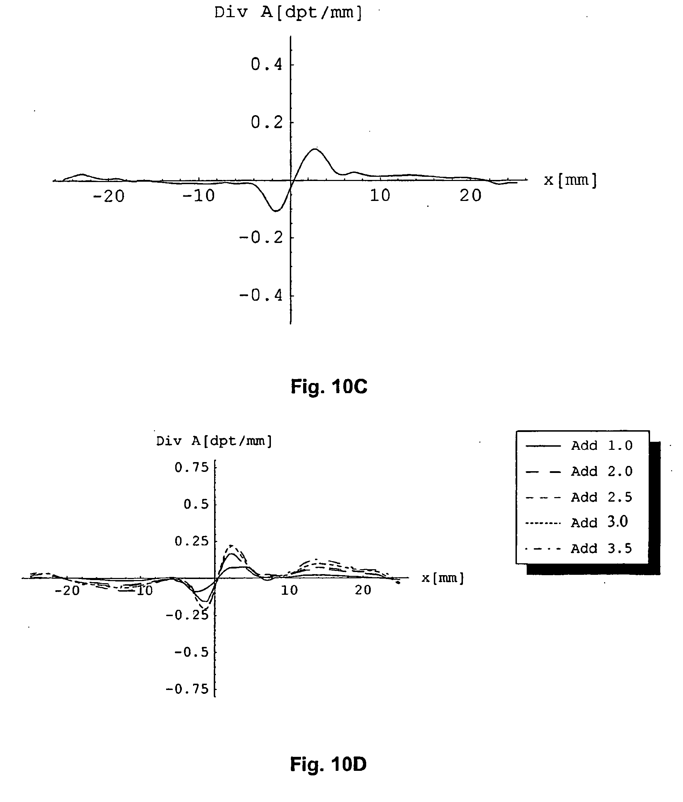

Wie aus Fig. 10A bis 10C ersichtlich, ist bezüglich der Größe $div\vec{A}$ bei $y = 0mm$ die Verbesserung vom Stand der Technik zur vorliegenden Erfindung besonders bemerkenswert. Ein unruhiges Verhalten mit vielen Extrema und steilen Flanken und Werten mit Beträgen über 0,25 dpt/mm charakteristisch für den Stand der Technik (Fig. 10A) wird in Ausführungsbeispiel 1, wie in Fig. 10B gezeigt, ersetzt durch je ein Maximum und ein Minimum mit Beträgen unter 0,17 dpt/mm für $|x| \leq 5mm$ und ein plateauförmiges Auslaufen mit Werten unter 0,06 dpt/mm. Für Ausführungsbeispiel 2 liegt die Höhe der Beträge der Extrema sogar unter 0,11 dpt/mm, und die Flanken überschreiten nicht den Betrag von 0,011 dpt/mm (Fig. 10C).

Die Größe $div\vec{A}$ skaliert bei $y = 0mm$ zwar nicht linear, aber affin mit der Addition, wie Fig. 10D (Ausführungsbeispiel 1) und 10E (Ausführungsbeispiel 2) für erfindungsgemäße Brillengläser mit Additionen 1,0, 2,0, 2,5, 3,0, 3,5 dpt illustrieren. Der Wert des Maximums skaliert für Ausführungsbeispiel 1 nach der Abhängigkeit

$$(div\vec{A})_{max} \approx (0{,}08\,\text{Addition/dpt} + 0{,}03)\ \text{dpt/mm}$$

und der des Minimums entsprechend

$$(div\vec{A})_{min} \approx (-0,05\,\text{Addition/dpt} - 0,08)\,\text{dpt/mm}\,.$$

Für Ausführungsbeispiel 2 gilt:

$$(div\vec{A})_{max} \approx (0,042\,\text{Addition/dpt} + 0,029)\,\text{dpt/mm}$$

$$(div\vec{A})_{min} \approx (-0,022\,\text{Addition/dpt} - 0,06)\,\text{dpt/mm}\,.$$

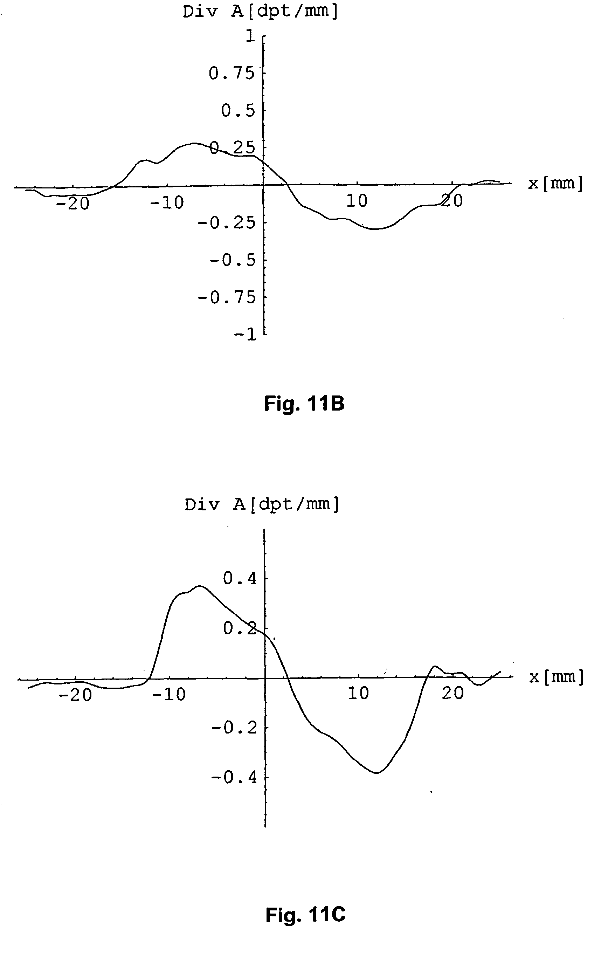

Figuren 11A bis 11E zeigen den Verlauf der Divergenz des Astigmatismus $div\vec{A}$ in dpt/mm im horizontalen Schnitt bei $y = -14mm$. Wie aus Fig. 11A ersichtlich, ist der Verlauf der Divergenz bei $y = -14mm$ durch deutlich ausgeprägte und mit steilen Flanken versehene Maxima und Minima mit Werten über 0,45 dpt/mm bzw. unter - 0,6 dpt/mm charakterisiert. Dagegen ist der Verlauf der Divergenz für die erfindungsgemäßen Ausführungsbeispiele deutlich glatter, wobei für Ausführungsbeispiel 1 das Maximum unter einem Wert vom 0,3 dpt/mm und das Minimum über einem Wert von -0,35 dpt/mm liegt. Für Ausführungsbeispiel 2 weist das Maximum einen Wert 0,4 dpt/mm und das Minimum einen Wert über -0,4 dpt/mm auf.

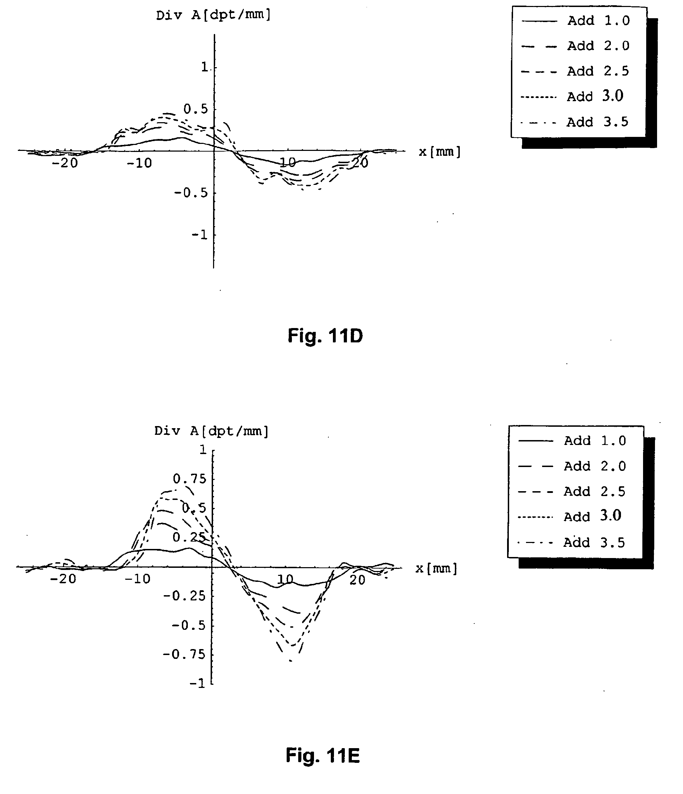

Figuren 11D (Ausführungsbeispiel 1) und 11 E (Ausführungsbeispiel 2) zeigen den Verlauf der Divergenz des Astigmatismus für eine Serie mit Additionen 1,0, 2,0, 2,5, 3,0, 3,5 dpt. Wie beim horizontalen Schnitt bei $y = 0mm$ skaliert die Größe $div\vec{A}$ auch bei $y = -14mm$ affin für Ausführungsbeispiel 1 mit der Addition wie Fig. 11D für die Additionen 1,0, 2,0, 2,5, 3,0, 3,5 dpt zeigt. Für Ausführungsbeispiel 2 ist der Zusammenhang sogar linear (siehe Fig. 11 E), führt aber zu höheren Absolutwerten von $div\vec{A}$ als im Fall von Ausführungsbeispiel 1. Für das Maximum von $div\vec{A}$ im Ausführungsbeispiel 1 gilt

$$(div\vec{A})_{max} \approx (0,12\,\text{Addition/dpt} + 0,06)\,\text{dpt/mm}\,,$$

für das Minimum dagegen

$$(div\vec{A})_{min} \approx (-0,13\,\text{Addition/dpt} - 0,05)\,\text{dpt/mm}\,.$$

Für Ausführungsbeispiel 2 gilt

$$(div\vec{A})_{max} \approx 0,2\,\text{Addition/dpt} * \text{dpt/mm}$$

$$(div\vec{A})_{min} \approx -0,22\,\text{Addition/dpt} * \text{dpt/mm}\,.$$

Tabelle 3A

| X/Y | -30,0 | -27,5 | -25,0 | -22,5 | -20,0 | -17,5 | -15,0 | -12,5 | -10,0 | -7,5 | -5,0 | -2,5 | 0,0 |
|---|---|---|---|---|---|---|---|---|---|---|---|---|---|
| 30,0 | 7,01201 | 6,43297 | 5,90677 | 5,43260 | 5,00970 | 4,63738 | 4,31515 | 4,04262 | 3,81937 | 3,64506 | 3,51945 | 3,44238 | 3,41370 |
| 27,5 | 6,45126 | 5,87398 | 5,34940 | 4,87673 | 4,45520 | 4,08414 | 3,76295 | 3,49122 | 3,26854 | 3,09458 | 2,96913 | 2,89199 | 2,86301 |
| 25,0 | 5,94229 | 5,36642 | 4,84311 | 4,37160 | 3,95115 | 3,58108 | 3,26080 | 2,98982 | 2,76771 | 2,59413 | 2,46884 | 2,39164 | 2,36240 |
| 22,5 | 5,48467 | 4,90984 | 4,38746 | 3,91676 | 3,49705 | 3,12769 | 2,80810 | 2,53778 | 2,31621 | 2,14301 | 2,01789 | 1,94067 | 1,91121 |
| 20,0 | 5,07803 | 4,50393 | 3,98210 | 3,51184 | 3,09249 | 2,72352 | 2,40439 | 2,13453 | 1,91342 | 1,74059 | 1,61569 | 1,53850 | 1,50886 |
| 17,5 | 4,72215 | 4,14848 | 3,62683 | 3,15656 | 2,73718 | 2,36829 | 2,04933 | 1,77972 | 1,55890 | 1,38637 | 1,26170 | 1,18459 | 1,15483 |
| 15,0 | 4,41704 | 3,84349 | 3,32158 | 2,85086 | 2,43108 | 2,06188 | 1,74274 | 1,47309 | 1,25235 | 1,07998 | 0,95551 | 0,87851 | 0,84867 |
| 12,5 | 4,16294 | 3,58917 | 3,06654 | 2,59496 | 2,17438 | 1,80444 | 1,48467 | 1,21458 | 0,99358 | 0,82115 | 0,69675 | 0,61985 | 0,58998 |
| 10,0 | 3,96016 | 3,38571 | 2,86204 | 2,38928 | 1,96748 | 1,59637 | 1,27550 | 1,00441 | 0,78266 | 0,60977 | 0,48519 | 0,40831 | 0,37843 |
| 7,5 | 3,80967 | 3,23383 | 2,70868 | 2,23440 | 1,81101 | 1,43827 | 1,11581 | 0,84320 | 0,62004 | 0,44599 | 0,32070 | 0,24362 | 0,21371 |
| 5,0 | 3,71317 | 3,13537 | 2,60807 | 2,13164 | 1,70609 | 1,33117 | 1,00651 | 0,73172 | 0,50645 | 0,33048 | 0,20363 | 0,12573 | 0,09567 |
| 2,5 | 3,67289 | 3,09268 | 2,56284 | 2,08367 | 1,65527 | 1,27741 | 0,94974 | 0,67185 | 0,44341 | 0,26429 | 0,13470 | 0,05500 | 0,02441 |
| 0,0 | 3,69136 | 3,10822 | 2,57551 | 2,09317 | 1,66132 | 1,27983 | 0,94829 | 0,66625 | 0,43335 | 0,24959 | 0,11561 | 0,03249 | 0,00048 |
| -2,5 | 3,77113 | 3,18444 | 2,64841 | 2,16252 | 1,72669 | 1,34085 | 1,00453 | 0,71718 | 0,47843 | 0,28849 | 0,14858 | 0,06048 | 0,02564 |
| -5,0 | 3,91476 | 3,32393 | 2,78382 | 2,29382 | 1,85346 | 1,46248 | 1,12048 | 0,82676 | 0,58095 | 0,38359 | 0,23657 | 0,14245 | 0,10365 |
| -7,5 | 4,12320 | 3,52790 | 2,98338 | 2,48872 | 2,04319 | 1,64635 | 1,29779 | 0,99689 | 0,74323 | 0,53769 | 0,38294 | 0,28243 | 0,23934 |
| -10,0 | 4,39668 | 3,79639 | 3,24684 | 2,74690 | 2,29575 | 1,89268 | 1,53713 | 1,22838 | 0,96640 | 0,75255 | 0,59019 | 0,48365 | 0,43671 |
| -12,5 | 4,73486 | 4,12888 | 3,57342 | 3,06742 | 2,60998 | 2,20026 | 1,83740 | 1,52047 | 1,25014 | 1,02850 | 0,85958 | 0,74823 | 0,69854 |
| -15,0 | 5,13735 | 4,52477 | 3,96243 | 3,44945 | 2,98485 | 2,56766 | 2,19689 | 1,87204 | 1,59445 | 1,36663 | 1,19286 | 1,07812 | 1,02670 |
| -17,5 | 5,60350 | 4,98305 | 4,41272 | 3,89182 | 3,41930 | 2,99417 | 2,61592 | 2,28437 | 2,00117 | 1,76898 | 1,59198 | 1,47510 | 1,42263 |
| -20,0 | 6,13248 | 5,50293 | 4,92400 | 4,39476 | 3,91409 | 3,48151 | 3,09679 | 2,75975 | 2,47238 | 2,23735 | 2,05851 | 1,94042 | 1,88720 |
| -22,5 | 6,72414 | 6,08520 | 5,49741 | 4,95974 | 4,47146 | 4,03220 | 3,64182 | 3,30038 | 3,00994 | 2,77320 | 2,59354 | 2,47498 | 2,42147 |
| -25,0 | 7,38002 | 6,73144 | 6,13480 | 5,58921 | 5,09398 | 4,64877 | 4,25345 | 3,90837 | 3,61559 | 3,37784 | 3,19806 | 3,07971 | 3,02646 |
| -27,5 | 8,10252 | 7,44403 | 6,83876 | 6,28578 | 5,78429 | 5,33370 | 4,93397 | 4,58577 | 4,29112 | 4,05266 | 3,87311 | 3,75547 | 3,70299 |
| -30,0 | 8,89531 | 8,22653 | 7,61273 | 7,05260 | 6,54507 | 6,08942 | 5,68566 | 5,33480 | 5,03857 | 4,79945 | 4,62007 | 4,50324 | 4,45190 |

| X/Y | 2,5 | 5,0 | 7,5 | 10,0 | 12,5 | 15,0 | 17,5 | 20,0 | 22,5 | 25,0 | 27,5 | 30,0 |
|---|---|---|---|---|---|---|---|---|---|---|---|---|
| 30,0 | 3,43327 | 3,50112 | 3,61754 | 3,78293 | 3,99778 | 4,26263 | 4,57809 | 4,94480 | 5,36347 | 5,83487 | 6,35980 | 6,93907 |
| 27,5 | 2,88204 | 2,94911 | 3,06456 | 3,22882 | 3,44240 | 3,70590 | 4,01992 | 4,38516 | 4,80234 | 5,27222 | 5,79559 | 6,37326 |
| 25,0 | 2,38093 | 2,44730 | 2,56189 | 2,72513 | 2,93759 | 3,19989 | 3,51269 | 3,87670 | 4,29266 | 4,76133 | 5,28348 | 5,85992 |
| 22,5 | 1,92930 | 1,99506 | 2,10889 | 2,27127 | 2,48279 | 2,74411 | 3,05592 | 3,41899 | 3,83405 | 4,30185 | 4,82314 | 5,39869 |
| 20,0 | 1,52657 | 1,59181 | 1,70500 | 1,86667 | 2,07746 | 2,33806 | 2,64920 | 3,01168 | 3,42622 | 3,89354 | 4,41436 | 4,98938 |
| 17,5 | 1,17223 | 1,23702 | 1,34969 | 1,51085 | 1,72117 | 1,98136 | 2,29221 | 2,65451 | 3,06899 | 3,53631 | 4,05706 | 4,63194 |
| 15,0 | 0,86582 | 0,93024 | 1,04255 | 1,20343 | 1,41359 | 1,67379 | 1,98481 | 2,34742 | 2,76234 | 3,23019 | 3,75137 | 4,32646 |
| 12,5 | 0,60693 | 0,67110 | 0,78325 | 0,94416 | 1,15462 | 1,41536 | 1,72712 | 2,09060 | 2,50646 | 2,97531 | 3,49742 | 4,07311 |
| 10,0 | 0,39525 | 0,45929 | 0,57161 | 0,73307 | 0,94446 | 1,20641 | 1,51953 | 1,88444 | 2,30178 | 2,77209 | 3,29556 | 3,87253 |
| 7,5 | 0,23049 | 0,29470 | 0,40778 | 0,57059 | 0,78370 | 1,04756 | 1,36270 | 1,72967 | 2,14906 | 2,62137 | 3,14701 | 3,72608 |
| 5,0 | 0,11254 | 0,17752 | 0,29230 | 0,45743 | 0,67321 | 0,93990 | 1,25788 | 1,62768 | 2,04987 | 2,52502 | 3,05363 | 3,63552 |
| 2,5 | 0,04163 | 0,10826 | 0,22601 | 0,39496 | 0,61483 | 0,88556 | 1,20746 | 1,58106 | 2,00695 | 2,48576 | 3,01789 | 3,60302 |
| 0,0 | 0,01837 | 0,08788 | 0,21031 | 0,38495 | 0,61068 | 0,88695 | 1,21398 | 1,59236 | 2,02279 | 2,50596 | 3,04211 | 3,63084 |
| -2,5 | 0,04431 | 0,11771 | 0,24619 | 0,42836 | 0,66194 | 0,94550 | 1,27910 | 1,66340 | 2,09927 | 2,58747 | 3,12811 | 3,72121 |
| -5,0 | 0,12251 | 0,20000 | 0,33515 | 0,52591 | 0,76895 | 1,06163 | 1,40343 | 1,79501 | 2,23746 | 2,73156 | 3,27749 | 3,87579 |
| -7,5 | 0,25746 | 0,33838 | 0,47979 | 0,67894 | 0,93194 | 1,23494 | 1,58645 | 1,98688 | 2,43737 | 2,93857 | 3,49084 | 4,09522 |
| -10,0 | 0,45377 | 0,53676 | 0,68318 | 0,88953 | 1,15173 | 1,46512 | 1,82711 | 2,23739 | 2,69683 | 3,20629 | 3,76642 | 4,37838 |

| | | | | | | | | | | | | |
|---|---|---|---|---|---|---|---|---|---|---|---|---|
| -12,5 | 0,71470 | 0,79855 | 0,94818 | 1,15987 | 1,42954 | 1,75226 | 2,12447 | 2,54487 | 3,01371 | 3,53215 | 4,10126 | 4,72211 |
| -15,0 | 1,04225 | 1,12639 | 1,27772 | 1,49296 | 1,76798 | 2,09792 | 2,47879 | 2,90874 | 3,38722 | 3,91521 | 4,49402 | 5,12452 |
| -17,5 | 1,43771 | 1,52195 | 1,67420 | 1,89161 | 2,17018 | 2,50527 | 2,89290 | 3,33095 | 3,81837 | 4,35581 | 4,94447 | 5,58532 |
| -20,0 | 1,90190 | 1,98622 | 2,13909 | 2,35779 | 2,63857 | 2,97718 | 3,36998 | 3,81475 | 4,31014 | 4,85633 | 5,45418 | 6,10517 |
| -22,5 | 2,43600 | 2,52033 | 2,67349 | 2,89288 | 3,17496 | 3,51598 | 3,91280 | 4,36323 | 4,86571 | 5,41989 | 6,02648 | 6,68710 |
| -25,0 | 3,04117 | 3,12543 | 3,27850 | 3,49807 | 3,78087 | 4,12366 | 4,52375 | 4,97906 | 5,48813 | 6,05011 | 6,66536 | 7,33549 |
| -27,5 | 3,71829 | 3,80244 | 3,95512 | 4,17451 | 4,45784 | 4,80218 | 5,20515 | 5,66492 | 6,18020 | 6,75011 | 7,37454 | 8,05484 |
| -30,0 | 4,46795 | 4,55223 | 4,70446 | 4,92368 | 5,20766 | 5,55367 | 5,95950 | 6,42364 | 6,94508 | 7,52312 | 8,15756 | 8,84917 |

Tabelle 3B

| X/Y | -30,0 | -27,5 | -25,0 | -22,5 | -20,0 | -17,5 | -15,0 | -12,5 | -10,0 | -7,5 | -5,0 | -2,5 | 0,0 |
|---|---|---|---|---|---|---|---|---|---|---|---|---|---|
| 30,0 | 7,07685 | 6,50602 | 5,98575 | 5,51551 | 5,09488 | 4,72350 | 4,40110 | 4,12747 | 3,90253 | 3,72631 | 3,59880 | 3,51939 | 3,48743 |
| 27,5 | 6,50679 | 5,93804 | 5,41954 | 4,95076 | 4,53130 | 4,16085 | 3,83915 | 3,56607 | 3,34150 | 3,16540 | 3,03781 | 2,95833 | 2,92640 |
| 25,0 | 5,98922 | 5,42224 | 4,90519 | 4,43761 | 4,01910 | 3,64936 | 3,32820 | 3,05553 | 2,83124 | 2,65525 | 2,52756 | 2,44798 | 2,41607 |
| 22,5 | 5,52352 | 4,95799 | 4,44212 | 3,97547 | 3,55767 | 3,18845 | 2,86768 | 2,59527 | 2,37117 | 2,19527 | 2,06750 | 1,98777 | 1,95582 |
| 20,0 | 5,10919 | 4,54479 | 4,02982 | 3,56384 | 3,14652 | 2,77762 | 2,45705 | 2,18478 | 1,96074 | 1,78486 | 1,65703 | 1,57716 | 1,54510 |
| 17,5 | 4,74581 | 4,18223 | 3,66786 | 3,20229 | 2,78520 | 2,41641 | 2,09587 | 1,82357 | 1,59950 | 1,42357 | 1,29566 | 1,21567 | 1,18351 |
| 15,0 | 4,43296 | 3,86999 | 3,35594 | 2,89049 | 2,47338 | 2,10446 | 1,78373 | 1,51124 | 1,28701 | 1,11097 | 0,98298 | 0,90291 | 0,87065 |
| 12,5 | 4,17021 | 3,60775 | 3,09386 | 2,62830 | 2,21089 | 1,84160 | 1,52046 | 1,24755 | 1,02296 | 0,84667 | 0,71856 | 0,63847 | 0,60615 |
| 10,0 | 3,95747 | 3,39533 | 2,88152 | 2,41570 | 1,99783 | 1,62794 | 1,30611 | 1,03251 | 0,80728 | 0,63052 | 0,50214 | 0,42196 | 0,38965 |
| 7,5 | 3,79556 | 3,23331 | 2,71924 | 2,25304 | 1,83454 | 1,46384 | 1,14105 | 0,86640 | 0,64018 | 0,46259 | 0,33367 | 0,25326 | 0,22092 |
| 5,0 | 3,68570 | 3,12283 | 2,60805 | 2,14099 | 1,72168 | 1,34999 | 1,02603 | 0,75002 | 0,52235 | 0,34339 | 0,21339 | 0,13240 | 0,09991 |
| 2,5 | 3,62990 | 3,06579 | 2,54974 | 2,08141 | 1,66084 | 1,28786 | 0,96243 | 0,68470 | 0,45503 | 0,27393 | 0,14194 | 0,05951 | 0,02653 |
| 0,0 | 3,63076 | 3,06489 | 2,54712 | 2,07716 | 1,65493 | 1,28030 | 0,95309 | 0,67320 | 0,44076 | 0,25628 | 0,12074 | 0,03543 | 0,00105 |
| -2,5 | 3,69140 | 3,12333 | 2,60340 | 2,13144 | 1,70726 | 1,33062 | 1,00116 | 0,71840 | 0,48206 | 0,29265 | 0,15183 | 0,06189 | 0,02469 |
| -5,0 | 3,81473 | 3,24419 | 2,72185 | 2,24760 | 1,82115 | 1,44193 | 1,10928 | 0,82249 | 0,58103 | 0,38539 | 0,23799 | 0,14221 | 0,10103 |
| -7,5 | 4,00175 | 3,42901 | 2,90460 | 2,42813 | 1,99898 | 1,61636 | 1,27944 | 0,98743 | 0,73985 | 0,53723 | 0,38263 | 0,28055 | 0,23509 |
| -10,0 | 4,25267 | 3,67813 | 3,15172 | 2,67277 | 2,24042 | 1,85375 | 1,51200 | 1,21440 | 0,96026 | 0,75025 | 0,58841 | 0,48032 | 0,43108 |
| -12,5 | 4,56762 | 3,99126 | 3,46248 | 2,98040 | 2,54420 | 2,15303 | 1,80624 | 1,50298 | 1,24216 | 1,02488 | 0,85655 | 0,74372 | 0,69181 |
| -15,0 | 4,94702 | 4,36806 | 3,83608 | 3,35016 | 2,90953 | 2,51353 | 2,16138 | 1,85211 | 1,58483 | 1,36165 | 1,18858 | 1,07254 | 1,01907 |
| -17,5 | 5,39017 | 4,80762 | 4,27161 | 3,78129 | 3,33580 | 2,93453 | 2,57676 | 2,26179 | 1,98939 | 1,76218 | 1,58619 | 1,46832 | 1,41413 |
| -20,0 | 5,89620 | 5,30922 | 4,76859 | 4,27332 | 3,82264 | 3,41605 | 3,05303 | 2,73342 | 2,45745 | 2,22794 | 2,05063 | 1,93203 | 1,87760 |
| -22,5 | 6,46489 | 5,87267 | 5,32677 | 4,82629 | 4,37055 | 3,95901 | 3,59165 | 3,26856 | 2,99043 | 2,76002 | 2,58265 | 2,46421 | 2,40997 |
| -25,0 | 7,09666 | 6,49805 | 5,94644 | 5,44081 | 4,98018 | 4,56451 | 4,19408 | 3,86893 | 3,58978 | 3,35937 | 3,18269 | 3,06514 | 3,01162 |
| -27,5 | 7,79271 | 7,18673 | 6,62886 | 6,11786 | 5,65292 | 5,23424 | 4,86207 | 4,53601 | 4,25651 | 4,02667 | 3,85116 | 3,73490 | 3,68238 |
| -30,0 | 8,55550 | 7,94149 | 7,37659 | 6,86006 | 6,39146 | 5,97079 | 5,59766 | 5,27113 | 4,99167 | 4,76277 | 4,58872 | 4,47398 | 4,42258 |

| X/Y | 2,5 | 5,0 | 7,5 | 10,0 | 12,5 | 15,0 | 17,5 | 20,0 | 22,5 | 25,0 | 27,5 | 30,0 |
|---|---|---|---|---|---|---|---|---|---|---|---|---|
| 30,0 | 3,50292 | 3,56618 | 3,67806 | 3,83929 | 4,04997 | 4,31020 | 4,62019 | 4,98011 | 5,39018 | 5,85068 | 6,36195 | 6,92447 |
| 27,5 | 2,94190 | 3,00511 | 3,11698 | 3,27808 | 3,48841 | 3,74809 | 4,05734 | 4,41634 | 4,82533 | 5,28454 | 5,79435 | 6,35524 |
| 25,0 | 2,43150 | 2,49474 | 2,60665 | 2,76762 | 2,97763 | 3,23687 | 3,54555 | 3,90389 | 4,31205 | 4,77031 | 5,27903 | 5,83867 |
| 22,5 | 1,97117 | 2,03453 | 2,14652 | 2,30730 | 2,51705 | 2,77598 | 3,08431 | 3,44223 | 3,84989 | 4,30755 | 4,81556 | 5,37433 |
| 20,0 | 1,56049 | 1,62398 | 1,73593 | 1,89656 | 2,10614 | 2,36496 | 2,67319 | 3,03099 | 3,43848 | 3,89591 | 4,40356 | 4,96177 |
| 17,5 | 1,19899 | 1,26251 | 1,37437 | 1,53492 | 1,74453 | 2,00348 | 2,31190 | 2,66990 | 3,07757 | 3,53508 | 4,04268 | 4,60064 |
| 15,0 | 0,88614 | 0,94962 | 1,06145 | 1,22211 | 1,43199 | 1,69134 | 2,00025 | 2,35877 | 2,76692 | 3,22483 | 3,73267 | 4,29065 |
| 12,5 | 0,62156 | 0,68499 | 0,79695 | 0,95793 | 1,16837 | 1,42845 | 1,73817 | 2,09752 | 2,50649 | 2,96507 | 3,47336 | 4,03150 |
| 10,0 | 0,40500 | 0,46847 | 0,58074 | 0,74237 | 0,95373 | 1,21492 | 1,52583 | 1,88634 | 2,29636 | 2,75583 | 3,26474 | 3,82330 |
| 7,5 | 0,23630 | 0,29997 | 0,41289 | 0,57561 | 0,78841 | 1,05119 | 1,36368 | 1,72567 | 2,13702 | 2,59758 | 3,10754 | 3,66708 |
| 5,0 | 0,11538 | 0,17964 | 0,29380 | 0,45830 | 0,67318 | 0,93807 | 1,25255 | 1,61634 | 2,02930 | 2,49152 | 3,00309 | 3,56422 |
| 2,5 | 0,04227 | 0,10781 | 0,22421 | 0,39155 | 0,60939 | 0,87708 | 1,19408 | 1,56013 | 1,97524 | 2,43963 | 2,95341 | 3,51677 |
| 0,0 | 0,01724 | 0,08515 | 0,20546 | 0,37738 | 0,59960 | 0,87103 | 1,19117 | 1,55999 | 1,97776 | 2,44477 | 2,96122 | 3,52726 |
| -2,5 | 0,04132 | 0,11282 | 0,23878 | 0,41737 | 0,64590 | 0,92251 | 1,24673 | 1,61898 | 2,03988 | 2,50993 | 3,02948 | 3,59857 |
| -5,0 | 0,11759 | 0,19305 | 0,32558 | 0,51234 | 0,74913 | 1,03280 | 1,36270 | 1,73958 | 2,16439 | 2,63801 | 3,16105 | 3,73348 |
| -7,5 | 0,25069 | 0,32948 | 0,46824 | 0,66330 | 0,90942 | 1,20194 | 1,53949 | 1,92279 | 2,35286 | 2,83083 | 3,35757 | 3,93335 |
| -10,0 | 0,44554 | 0,52622 | 0,66990 | 0,87223 | 1,12742 | 1,42959 | 1,77592 | 2,16690 | 2,60366 | 3,08732 | 3,61876 | 4,19845 |
| -12,5 | 0,70541 | 0,78682 | 0,93354 | 1,14119 | 1,40406 | 1,71545 | 2,07077 | 2,46992 | 2,91427 | 3,40480 | 3,94213 | 4,52680 |
| -15,0 | 1,03217 | 1,11371 | 1,26191 | 1,47294 | 1,74124 | 2,06002 | 2,42380 | 2,83121 | 3,28355 | 3,78170 | 4,32588 | 4,91665 |
| -17,5 | 1,42697 | 1,50839 | 1,65711 | 1,86997 | 2,14170 | 2,46566 | 2,83623 | 3,25129 | 3,71125 | 4,21681 | 4,76841 | 5,36643 |
| -20,0 | 1,89043 | 1,97160 | 2,12035 | 2,33398 | 2,60752 | 2,93479 | 3,31048 | 3,73178 | 4,19840 | 4,71057 | 5,26915 | 5,87496 |
| -22,5 | 2,42289 | 2,50383 | 2,65235 | 2,86601 | 3,14021 | 3,46937 | 3,84858 | 4,27480 | 4,74698 | 5,26525 | 5,83047 | 6,44401 |
| -25,0 | 3,02482 | 3,10554 | 3,25358 | 3,46672 | 3,74088 | 4,07118 | 4,45292 | 4,88311 | 5,36035 | 5,88454 | 6,45649 | 7,07762 |
| -27,5 | 3,69595 | 3,77662 | 3,92417 | 4,13680 | 4,41085 | 4,74204 | 5,12614 | 5,55995 | 6,04208 | 6,57224 | 7,15106 | 7,77987 |
| -30,0 | 4,43675 | 4,51761 | 4,66491 | 4,87726 | 5,15143 | 5,48364 | 5,87017 | 6,30779 | 6,79480 | 7,33093 | 7,91672 | 8,55327 |

**Patentansprüche**

1. Verfahren zum Herstellen eines progressiven Brillenglases mit zumindest einer progressiven Fläche, wobei das Brillenglas

   - einen zum Sehen in größere Entfernungen ausgelegten Fernsichtteil mit einem Fernbezugspunkt,
   - einen zum Sehen in kürzere Entfernungen ausgelegten Nahsichtteil mit einem Nahbezugspunkt und
   - eine zwischen dem Fern- und dem Nahsichtteil angeordnete Progressionszone, in welcher die Wirkung des Brillenglases von dem Wert in dem Fernbezugspunkt auf den Wert in dem Nahbezugspunkt entlang einer Hauptlinie um einen als Addition bezeichneten Wert zunimmt,

   umfaßt,
   wobei ein Berechnungs- und Optimierungsschritt des progressiven Brillenglases derart erfolgt, daß:

   - der Beitrag $|rot\vec{A}|$ der Rotation und/oder der Divergenz $|div\vec{A}|$ eines vektoriellen Astigmatismus $\vec{A}$ möglichst klein ist; und
   - ein globales Maximum des Beitrages $|div\vec{A}|$ der Divergenz des vektoriellen Astigmatismus $\vec{A}$ außerhalb der Zone guter Sicht des Brillenglases, in welcher der Betrag des vektoriellen Astigmatismus $\vec{A}$ kleiner als 0,6 dpt ist; und/oder
   - der Beitrag $|rot\vec{A}|$ der Rotation des vektoriellen Astigmatismus $\vec{A}$ im Nahsichtteil und/oder im Fernsichtteil nicht über einen maximalen Wert von $|rot\vec{A}|$ max = 0,25 Addition/dpt * dpt/mm ansteigt,

   wobei der Betrag $|\vec{A}|$ des vektoriellen Astigmatismus $\vec{A}$ gleich zu dem Betrag und die Richtung des vektoriellen Astigmatismus $\vec{A}$ das Doppelte des Winkels der Achslage eines Astigmatismus in Gebrauchsstellung des progressiven Brillenglases oder eines Flächenastigmatismus der zumindest einen progressiven Fläche des progressiven Brillenglases ist.

2. Verfahren nach Anspruch 1, wobei der Berechnungs- und Optimierungsschritt derart erfolgt, daß die x- Koordinate der Position des globalen Maximums des Betrages $|div\vec{A}|$ der Divergenz des vektoriellen Astigmatismus $\vec{A}$ größer als 6,0 mm und die $y$ -Koordinate kleiner als -8,5 mm ist und wobei x die horizontale Achse und $y$ die vertikale Achse in Gebrauchsstellung bezeichnen und der Nullpunkt x = 0, $y$ = 0 vier Millimeter unterhalb des Zentrierpunkts des Brillenglases liegt.

3. Verfahren nach einem der Ansprüche 1 oder 2, wobei der Berechnungs- und Optimierungsschritt derart erfolgt, daß für alle progressiven Flächen mit Addition $\geq$ 2,0 dpt alle den Wert des (0,1/mm)-fachen der Addition überschreitende Extrema des Betrages $|div\vec{A}|$ der Divergenz des vektoriellen Astigmatismus $\vec{A}$ außerhalb des Gebiets $y \geq$ -9$mm$ des Brillenglases liegen.

4. Verfahren nach einem der vorangegangenen Ansprüche, wobei der Berechnungs- und Optimierungsschritt derart erfolgt, daß der Betrag $|rot\vec{A}|$ der Rotation des vektoriellen Astigmatismus $\vec{A}$ im Horizontalschnitt bei $y$ = -14$mm$ nicht über einen maximalen Wert von $|rot\vec{A}|$ max = 0,115 Addition/dpt * dpt/mm , bevorzugt $|rot\vec{A}|$ max $\approx$ 0,08 Addition/dpt * dpt/mm ansteigt.

5. Verfahren nach einem der vorangegangenen Ansprüche, wobei der Berechnungs- und Optimierungsschritt derart erfolgt, daß der Betrag $|rot\vec{A}|$ der Rotation des vektoriellen Astigmatismus $\vec{A}$ im Horizontalschnitt bei $y$=+6$mm$ nicht über einen maximalen Wert von $|rot\vec{A}|$ max = 0,115 Addition/dpt * dpt/mm , bevorzugt $|rot\vec{A}|$ max = 0,06 Addition/dpt * dpt/mm ansteigt.

6. Verfahren nach einem der vorangegangenen Ansprüche, wobei der Berechnungs- und Optimierungsschritt derart erfolgt, daß im Fernsichtteil zwischen $y$ = 3$mm$ und $y$ = 5$mm$ ein Horizontalschnitt $y$ = const. existiert, entlang dessen der Betrag $|rot\vec{A}|$ der Rotation des vektoriellen Astigmatismus $\vec{A}$ von der Hauptlinie an monoton nach außen hin bis zu einer Koordinate von |x| = 16$mm$ ansteigt.

7. Verfahren nach einem der vorangegangenen Ansprüche, wobei der Berechnungs- und Optimierungsschritt derart erfolgt, daß die Divergenz $div\vec{A}$ des vektoriellen Astigmatismus Ä im Horizontalschnitt bei $y$=0$mm$ nicht über einen maximalen Wert von $(div\vec{A})$ max $\approx$ (0,11Addition/dpt + 0,03) dpt/mm , bevorzugt $(div\vec{A})$ max $\approx$ (0,08Addition/dpt + 0,03) dpt/mm ansteigt.

8. Verfahren nach einem der vorangegangenen Ansprüche, wobei der Berechnungs- und Optimierungsschritt derart erfolgt, daß die Divergenz $div\vec{A}$ des vektoriellen Astigmatismus $\vec{A}$ im Horizontalschnitt bei $y$=0$mm$ nicht unter einen minimalen Wert von $(div\vec{A})$ min = (-0,07Addition/dpt - 0,11) dpt/mm , bevorzugt $(div\vec{A})$ min = (-0,05Addition/dpt - 0,08) dpt/mm absinkt.

9. Verfahren nach einem der vorangegangenen Ansprüche, wobei der Berechnungs- und Optimierungsschritt derart erfolgt, daß die Divergenz $div\vec{A}$ des vektoriellen Astigmatismus $\vec{A}$ im Horizontalschnitt bei $y$ = -14mm nicht über einen maximalen Wert von $(div\vec{A})$ max $\approx$ (0,12Addition/dpt + 0,06) dpt/mm ansteigt.

10. Verfahren nach einem der vorangegangenen Ansprüche, wobei der Berechnungs- und Optimierungsschritt derart erfolgt, daß die Divergenz $div\vec{A}$ des vektoriellen Astigmatismus $\vec{A}$ im Horizontalschnitt bei $y$ =-14mm nicht unter einen minimalen Wert von $(div\vec{A})$ min = (-0,13Addition/dpt - 0,05) dpt/mm absinkt.

11. Progressives Brillenglas mit zumindest einer progressiven Fläche, wobei das Brillenglas zumindest:

   - ein zum Sehen in größere Entfernungen ausgelegtes Fernsichtteil mit einem Fernbezugspunkt;
   - ein zum Sehen in kürzere Entfernungen ausgelegtes Nahsichtteil mit einem Nahbezugspunkt; und
   - eine zwischen dem Fern- und dem Nahsichtteil angeordnete Progressionszone, in der die Wirkung des Brillenglases von dem Wert in dem Fernbezugspunkt auf den Wert in dem Nahbezugspunkt entlang einer Hauptlinie um einen als Addition bezeichneten Wert zunimmt,
   umfaßt, wobei
   - das globale Maximum des Betrages $|div\vec{A}|$ der Divergenz eines vektoriellen Astigmatismus $\vec{A}$ außerhalb der Zone guter Sicht des Brillenglases, in welcher der Betrag des vektoriellen Astigmatismus l$\vec{A}$l kleiner als 0,6 dpt ist, und/oder
   - der Betrag $|rot\vec{A}|$ der Rotation des vektoriellen Astigmatismus $\vec{A}$ im Nahsichtteil und/oder im Fernsichtteil nicht über einen maximalen Wert von $|rot\vec{A}|$ max = 0,25 Addition/dpt * dpt/mm ansteigt, und

wobei der Betrag $|\vec{A}|$ des vektoriellen Astigmatismus Ä gleich dem Betrag und die Richtung des vektoriellen Astigmatismus $\vec{A}$ das Doppelte des Winkels der Achslage eines Astigmatismus in Gebrauchsstellung des progressiven Brillenglases oder eines Flächenastigmatismus der zumindest einen progressiven Fläche des progressiven Brillenglases ist, wobei die Gebrauchsstellung durch folgende Parameter definiert ist:

- Pupillendistanz = 64,0 mm;
- Hornhautscheitelabstand = 13,0 mm;
- Vorneigung = 7,0 Grad;
- Augendrehpunktabstand = 26,5 mm.

**12.** Progressives Brillenglas nach Anspruch 11, wobei die $x$- Koordinate der Position des globalen Maximums des Betrages $|div\vec{A}|$ der Divergenz des vektoriellen Astigmatismus $\vec{A}$ größer als 6,0 mm und die $y$ -Koordinate kleiner als -8,5 mm ist und wobei $x$ die horizontale Achse und $y$ die vertikale Achse in Gebrauchsstellung bezeichnen, und der Nullpunkt $x = 0$, $y = 0$ vier Millimeter unterhalb des Zentrierpunkts des Brillenglases liegt.

**13.** Progressives Brillenglas nach einem der Ansprüche 11 oder 12; wobei für alle progressiven Flächen mit Addition $\geq 2,0$ dpt alle den Wert des (0,1/mm)-fachen der Addition überschreitende Extrema des Betrages $|div\vec{A}|$ der Divergenz des vektoriellen Astigmatismus $\vec{A}$ außerhalb des Gebiets $y \geq$ -9$mm$ des Brillenglases liegen.

**14.** Progressives Brillenglas nach einem der Ansprüche 11 bis 13, wobei der Betrag $|rot\vec{A}|$ der Rotation des vektoriellen Astigmatismus $\vec{A}$ im Horizontalschnitt bei $y$ =-14$mm$ nicht über einen maximalen Wert von $|rot\vec{A}|_{max}$ = 0,115 Addition/dpt * dpt/mm, bevorzugt $|rot\vec{A}|$ max $\approx$ 0,08 Addition/dpt * dpt/mm ansteigt.

**15.** Progressives Brillenglas nach einem der Ansprüche 11 bis 14, wobei der Betrag $|rot\vec{A}|$ der Rotation des vektoriellen Astigmatismus $\vec{A}$ im Horizontalschnitt bei $y$ =+6$mm$ nicht über einen maximalen Wert von $|rot\vec{A}|$ max = 0,115 Addition/dpt * dpt/mm, bevorzugt $|rot\vec{A}|_{max} \approx$ 0,06 Addition/dpt * dpt/mm ansteigt.

**16.** Progressives Brillenglas nach einem der Ansprüche 11 bis 15, wobei im Fernsichtteil zwischen $y = 3mm$ und $y = 5mm$ ein Horizontalschnitt $y = const.$ existiert, entlang dessen der Betrag $| rot\vec{A}|$ der Rotation des vektoriellen Astigmatismus $\vec{A}$ von der Hauptlinie an monoton nach außen hin bis zu einer Koordinate von $|x| = 16mm$ ansteigt.

**17.** Progressives Brillenglas nach einem der Ansprüche 11 bis 16, wobei die Divergenz $div\vec{A}$ des vektoriellen Astigmatismus $\vec{A}$ im Horizontalschnitt bei $y = 0mm$ nicht über einen maximalen Wert von $(div\vec{A})_{max} \approx$ (0,11Addition/dpt + 0,03) dpt/mm ,
bevorzugt $(div\vec{A})_{max} \approx$ (0,08Addition/dpt + 0,03) dpt/mm ansteigt.

**18.** Progressives Brillenglas nach einem der Ansprüche 11 bis 17, wobei die Divergenz $div\vec{A}$ des vektoriellen Astigmatismus $\vec{A}$ im Horizontalschnitt bei $y = 0mm$ nicht unter einen minimalen Wert von $(div\vec{A})_{min} \approx$ (-0,07Addition/dpt - 0,11) dpt/mm,
bevorzugt $(div\vec{A})_{min} \approx$ (-0,05Addition/dpt - 0,08) dpt/mm absinkt.

**19.** Progressives Brillenglas nach einem der Ansprüche 11 bis 18, wobei die Divergenz $div\vec{A}$ des vektoriellen Astigmatismus Ä im Horizontalschnitt bei $y$=-14$mm$ nicht über einen maximalen Wert von $(div\vec{A})_{max}$ = (0,12Addition/dpt + 0,06) dpt/mm ansteigt.

**20.** Progressives Brillenglas nach einem der Ansprüche 11 bis 19, wobei die Divergenz $div\vec{A}$ des vektoriellen Astigmatismus $\vec{A}$ im Horizontalschnitt bei $y$ = -14$mm$ nicht unter einen minimalen Wert von $(div\vec{A})_{min}$ = (-0,13Addition/dpt - 0,05) dpt/mm absinkt.

**Claims**

**1.** Process for producing a progressive spectacle lens with at least one progressive surface, wherein the spectacle lens comprises

• a distance vision part with a distance reference point designed for vision to longer distances,

• a near vision part with near reference point designed for vision to shorter distances and
• a progression zone, which is arranged between the distance and near vision part and in which the power of the spectacle lens increases from the value in the distance reference point to the value in the near reference point along a principal line by a value referred to as an addition,

wherein a calculation and optimisation step of the progressive spectacle lens is performed in such a manner that

• the magnitude $|rot\overline{A}|$ of rotation and/or of divergence $|div\overline{A}|$ of a vectorial astigmatism $\overline{A}$ is as small as possible; and
• a global maximum of the magnitude $|div\tilde{A}|$ of divergence of the vectorial astigmatism $\overline{A}$ outside the zone of good vision of the spectacle lens, in which the magnitude of the vectorial astigmatism $\overline{A}$ is lower than 0.6 dpt, and/or
• the magnitude $|rot\overline{A}|$ of rotation of the vectorial astigmatism $\overline{A}$ in the near vision part and/or in the distance vision part does not increase above a maximum value of $|rot\overline{A}|_{max} \approx 0.25$ addition/dpt*dpt/mm,

wherein the magnitude $|\overline{A}|$ of the vectorial astigmatism $\overline{A}$ is equal to the magnitude and the direction of the vectorial astigmatism $\overline{A}$ is double the angle of the axial position of an astigmatism in the position of use of the progressive spectacle lens or a surface astigmatism of the at least one progressive surface of the progressive spectacle lens.

2. Process according to claim 1, wherein the calculation and optimisation step is performed in such a manner that the x-coordinate of the position of the global maximum of the magnitude $|div\overline{A}|$ of divergence of the vectorial astigmatism $\overline{A}$ is higher than 6.0 mm and the y-coordinate is lower than -8.5 mm, and wherein x designates the horizontal axis and y designates the vertical axis in the position of use and the zero point x = 0, y = 0 lies four millimetres below the centring point of the spectacle lens.

3. Process according to one of claims 1 or 2, wherein the calculation and optimisation step is performed in such a manner that for all progressive surfaces with addition $\geq$ 2.0 dpt all extreme values of the magnitude $|div\overline{A}|$ of divergence of the vectorial astigmatism $\overline{A}$ exceeding the value of (0.1/mm)-times the addition lie outside the y $\geq$ -9mm region of the spectacle lens.

4. Process according to one of the preceding claims, wherein the calculation and optimisation step is performed in such a manner that the magnitude $|rot\overline{A}|$ of rotation of the vectorial astigmatism $\overline{A}$ in the horizontal section at y = -14 mm does not increase above a maximum value of $|rot\overline{A}|_{max} \approx 0.115$ addition/dpt*dpt/mm, preferably $|rot\overline{A}|_{max} \approx 0.08$ addition/dpt*dpt/mm.

5. Process according to one of the preceding claims, wherein the calculation and optimisation step is performed in such a manner that the magnitude $|rot\overline{A}|$ of rotation of the vectorial astigmatism $\overline{A}$ in the horizontal section at y = +6 mm does not increase above a maximum value of $|rot\overline{A}|_{max} \approx 0.115$ addition/dpt*dpt/mm, preferably $|rot\overline{A}|_{max} \approx 0.06$ addition/dpt*dpt/mm.

6. Process according to one of the preceding claims, wherein the calculation and optimisation step is performed in such a manner that in the distance vision part between y = 3 mm and y = 5 mm a horizontal section y = const. exists, along which the magnitude $|rot\overline{A}|$ of rotation of the vectorial astigmatism $\overline{A}$ from the principal line increases monotonically outwards to a coordinate of $|x|$ = 16 mm.

7. Process according to one of the preceding claims, wherein the calculation and optimisation step is performed in such a manner that the divergence $div\overline{A}$ of the vectorial astigmatism $\overline{A}$ in the horizontal section at y = 0 mm does not increase above a maximum value of $(div\overline{A})_{max} \approx (0.11$ addition/dpt + 0.03)dpt/mm, preferably $(div\overline{A})_{max} \approx (0.08$ addition/dpt + 0.03)dpt/mm.

8. Process according to one of the preceding claims, wherein the calculation and optimisation step is performed in such a manner that the divergence $div\overline{A}$ of the vectorial astigmatism $\overline{A}$ in the horizontal section at y = 0 mm does not drop below a minimum value of $(div\overline{A})_{min} \approx (-0.07$ addition/dpt - 0.11)dpt/mm, preferably $(div\overline{A})_{min} \approx (-0.05$ addition/dpt - 0.08)dpt/mm.

9. Process according to one of the preceding claims, wherein the calculation and optimisation step is performed in such a manner that the divergence $div\overline{A}$ of the vectorial astigmatism $\overline{A}$ in the horizontal section at y = -14 mm does not increase above a maximum value of $(div\overline{A})_{max} \approx (0.12$ addition/dpt + 0.06)dpt/mm.

10. Process according to one of the preceding claims, wherein the calculation and optimisation step is performed in such a manner that the divergence $div\overline{A}$ of the vectorial astigmatism $\overline{A}$ in the horizontal section at y = -14 mm does not drop below a minimum value of $(div\overline{A})_{min} \approx$ (-0.13 addition/dpt - 0.05)dpt/mm.

11. Progressive spectacle lens with at least one progressive surface, wherein the spectacle lens comprises at least

   • a distance vision part with a distance reference point designed for vision to longer distances,
   • a near vision part with near reference point designed for vision to shorter distances and
   • a progression zone, which is arranged between the distance and near vision part and in which the power of the spectacle lens increases from the value in the distance reference point to the value in the near reference point along a principal line by a value referred to as an addition,

   wherein

   • the global maximum of the magnitude $|rot\overline{A}|$ of divergence of the vectorial astigmatism $\overline{A}$ outside the zone of good vision of the spectacle lens, in which the magnitude of the vectorial astigmatism $\overline{A}$ is lower than 0.6 dpt, and/or
   • the magnitude $|rot\overline{A}|$ of rotation of the vectorial astigmatism A in the near vision part and/or in the distance vision part does not increase above a maximum value of $|rot\overline{A}|_{max} \approx$ 0.25 addition/dpt*dpt/mm, and

   wherein the magnitude $|\overline{A}|$ of the vectorial astigmatism $\overline{A}$ is equal to the magnitude and the direction of the vectorial astigmatism $\overline{A}$ is double the angle of the axial position of an astigmatism in the position of use of the progressive spectacle lens or a surface astigmatism of the at least one progressive surface of the progressive spectacle lens, wherein the position of use is defined by the following parameters:

   • interpupillary distance = 64.0 mm;
   • corneal vertex distance = 13.0 mm;
   • forward inclination = 7.0 degrees;
   • distance between the centres of rotation of the eye = 26.5 mm.

12. Progressive spectacle lens according to claim 11, wherein the x-coordinate of the position of the global maximum of the magnitude $|div\overline{A}|$ of divergence of the vectorial astigmatism $\overline{A}$ is higher than 6.0 mm and the y-coordinate is lower than -8.5 mm, and wherein x designates the horizontal axis and y designates the vertical axis in the position of use and the zero point x = 0, y = 0 lies four millimetres below the centring point of the spectacle lens.

13. Progressive spectacle lens according to one of claims 11 or 12, wherein for all progressive surfaces with addition $\geq$ 2.0 dpt all extreme values of the magnitude $|div\overline{A}|$ of divergence of the vectorial astigmatism $\overline{A}$ exceeding the value of (0.1/mm)-times the addition lie outside the y $\geq$ -9mm region of the spectacle lens.

14. Progressive spectacle lens according to one of claims 11 to 13, wherein the magnitude $|rot\overline{A}|$ of rotation of the vectorial astigmatism $\overline{A}$ in the horizontal section at y = -14 mm does not increase above a maximum value of $|rot\overline{A}|_{max} \approx$ 0.115 addition/dpt*dpt/mm, preferably $|rot\overline{A}|_{max} \approx$ 0.08 addition/dpt*dpt/mm.

15. Progressive spectacle lens according to one of claims 11 to 14, wherein the magnitude $|rot\overline{A}|$ of rotation of the vectorial astigmatism $\overline{A}$ in the horizontal section at y = +6 mm does not increase above a maximum value of $|rot\overline{A}|_{max} \approx$ 0.115 addition/dpt*dpt/mm, preferably $|rot\overline{A}|_{max} \approx$ 0.06 addition/dpt*dpt/mm.

16. Progressive spectacle lens according to one of claims 11 to 15, wherein in the distance vision part between y = 3 mm and y = 5 mm a horizontal section y = const. exists, along which the magnitude $|rot\overline{A}|$ of rotation of the vectorial astigmatism $\overline{A}$ from the principal line increases monotonically outwards to a coordinate of $|x|$ = 16 mm.

17. Progressive spectacle lens according to one of claims 11 to 16, wherein the divergence $div\overline{A}$ of the vectorial astigmatism $\overline{A}$ in the horizontal section at y = 0 mm does not increase above a maximum value of $(div\overline{A})_{max} \approx$ (0.11 addition/dpt + 0.03)dpt/mm, preferably $(div\overline{A})_{max} \approx$ (0.08 addition/dpt + 0.03)dpt/mm.

18. Progressive spectacle lens according to one of claims 11 to 17, wherein the divergence $div\overline{A}$ of the vectorial astigmatism $\overline{A}$ in the horizontal section at y = 0 mm does not drop below a minimum value of $5div\overline{A})_{min} \approx$ (-0.07 addition/dpt - 0.11)dpt/mm, preferably $5div\overline{A})_{min} \approx$ (-0.05 addition/dpt - 0.08)dpt/mm.

**19.** Progressive spectacle lens according to one of claims 11 to 18, wherein the divergence $div\overline{A}$ of the vectorial astigmatism $\overline{A}$ in the horizontal section at y = -14 mm does not increase above a maximum value of $(div\overline{A})_{max} \approx (0.12$ addition/dpt + 0.06)dpt/mm.

**20.** Progressive spectacle lens according to one of claims 11 to 19, wherein the divergence $div\overline{A}$ of the vectorial astigmatism $\overline{A}$ in the horizontal section at y = -14 mm does not drop below a minimum value of $(div\overline{A})_{min} \approx (-0.13$ addition/dpt - 0.05)dpt/mm.

**Revendications**

**1.** Procédé de fabrication d'un verre de lunettes progressif avec au moins une surface progressive, moyennant quoi le verre de lunettes comprend

- une pièce de vision sur longue distance positionnée avec un point de référence éloigné permettant de voir de loin,
- une pièce de vision sur courte distance positionnée avec un point de référence proche permettant de voir de près,
- une zone progressive située entre la pièce de vision sur longue distance et la pièce de vue sur courte distance dans laquelle l'action du verre de lunettes s'amplifie d'une valeur appelée addition en fonction de la valeur au niveau du point de référence éloigné par rapport à la valeur au niveau du point de référence proche en suivant une ligne principale,

moyennant quoi une étape de calcul et d'optimisation du verre de lunettes progressif se déroule de telle sorte que :

- la valeur $|rot\overline{A}|$ de rotation et/ou de divergence $|div\overline{A}|$ d'un astigmatisme vectoriel $\overline{A}$ est, si possible, faible et
- un maximum global de la valeur de divergence $|div\overline{A}|$ de l'astigmatisme vectoriel $\overline{A}$ est situé en dehors de la zone de bonne vision du verre de lunettes, zone dans laquelle la valeur de l'astigmatisme vectoriel $\overline{A}$ est inférieure à 0,6 dpt et/ou
- la valeur $|rot\overline{A}|$ de rotation de l'astigmatisme vectoriel $\overline{A}$ au niveau de la pièce de vision sur courte distance et/ou au niveau de la pièce de vision sur longue distance ne dépasse pas une valeur maximale de $|rot\overline{A}|_{max}$ ≈ **0,25 Addition/dpt \*dpt/mm**

moyennant quoi la valeur $|\overline{A}|$ de l'astigmatisme vectoriel $\overline{A}$ est égale à cette valeur et la direction de l'astigmatisme vectoriel $\overline{A}$ correspond au double de l'angle de position d'axe d'un astigmatisme en position d'utilisation d'un verre de lunettes progressif ou d'un astigmatisme de surface de la surface au moins une progressive du verre de lunettes progressif.

**2.** Procédé selon la revendication 1 dans lequel l'étape de calcul et d'optimisation se déroule de telle sorte que les coordonnées x de la position du maximum global de la valeur $|div\overline{A}|$ de divergence de l'astigmatisme vectoriel $\overline{A}$ sont supérieures à 6,0 mm et les coordonnées y sont inférieures à -8,5 mm et dans lequel x désigne l'axe horizontal et y l'axe vertical en position d'utilisation et le point zéro x=0, y=0 se trouve à quatre millimètres en dessous du point focal du verre de lunettes.

**3.** Procédé selon l'une quelconque des revendications 1 ou 2 dans lequel l'étape de calcul et d'optimisation se déroule de telle sorte que, pour toutes les surfaces progressives d'une addition supérieure ou égale à 2,0˚dpt, tous les extrema de la valeur $|div\overline{A}|$ de divergence de l'astigmatisme vectoriel $\overline{A}$ dépassant la valeur du facteur de multiplication de 0,1/mm de l'addition se trouvent en dehors de la zone y≥-9 mm du verre de lunettes.

**4.** Procédé selon l'une quelconque des revendications précédentes dans lequel l'étape de calcul et d'optimisation se déroule de telle sorte que la valeur $|rot\overline{A}|$ de rotation de l'astigmatisme vectoriel $\overline{A}$ , dans une coupe horizontale dans laquelle y=-14 mm, ne dépasse pas une valeur maximale de $|rot\overline{A}|_{max}$ ≈ **0,115 Addition/dpt \* dpt/mm** de préférence $|rot\overline{A}|_{max}$ ≈ **0,08 Addition/dpt \* dpt/mm**

**5.** Procédé selon l'une quelconque des revendications précédentes dans lequel l'étape de calcul et d'optimisation se déroule de telle sorte que la valeur $|rot\overline{A}|$ de rotation de l'astigmatisme vectoriel $\overline{A}$ , dans une coupe horizontale dans laquelle y=+6 mm, ne dépasse pas une valeur maximale de $|rot\overline{A}|_{max}$ ≈ **0,115 Addition/dpt\*dpt/mm** , de préférence $|rot\overline{A}|_{max}$ ≈ **0,06 Addition/dpt \* dpt/mm**

**6.** Procédé selon l'une quelconque des revendications précédentes dans lequel l'étape de calcul et d'optimisation se déroule de telle sorte que, dans la pièce de vision sur longue distance, une coupe horizontale y=const. est réalisée entre y=3 mm et y=5 mm, coupe le long de laquelle la valeur $|rot\overline{A}|$ de rotation de l'astigmatisme vectoriel $\overline{A}$ augmente de manière uniforme par rapport à la ligne principale et part de l'extérieur pour atteindre des coordonnées $|x|$ =16 mm.

**7.** Procédé selon l'une quelconque des revendications précédentes dans lequel l'étape de calcul et d'optimisation se déroule de telle sorte que la divergence $div\overline{A}$ de l'astigmatisme vectoriel $\overline{A}$, dans une coupe horizontale dans laquelle y=0 mm, ne dépasse pas une valeur maximale de $(div\overline{A})_{max} \approx$ **(0,11Addition/dpt + 0,03) dpt/mm** , de $(div\overline{A})_{max} \approx$ **(0,08Addition/dpt + 0,03) dpt/mm** préférence .

**8.** Procédé selon l'une quelconque des revendications précédentes dans lequel l'étape de calcul et d'optimisation se déroule de telle sorte que la divergence $div\overline{A}$ de l'astigmatisme vectoriel $\overline{A}$, dans une coupe horizontale dans laquelle y=0 mm, ne passe pas sous une valeur minimale de $(div\overline{A})_{min} \approx$ **(-4,07Addition/dpt-0,11) dpt/mm** , de préférence $(div\overline{A})min \approx$ **(-0.05Addttion/dpt-0,08)dpt/mm**

**9.** Procédé selon l'une quelconque des revendications précédentes dans lequel l'étape de calcul et d'optimisation se déroule de telle sorte que la divergence $div\overline{A}$ de l'astigmatisme vectoriel $\overline{A}$, dans une coupe horizontale dans laquelle y=-14 mm, ne dépasse pas une valeur maximale de $(div\overline{A})_{max} \approx$ **(0,12Addition/dpt + 0,06) dpt/mm**

**10.** Procédé selon l'une quelconque des revendications précédentes dans lequel l'étape de calcul et d'optimisation se déroule de telle sorte que la divergence $div\overline{A}$ de l'astigmatisme vectoriel $\overline{A}$, dans une coupe horizontale dans laquelle y=-14 mm, ne passe pas sous une valeur minimale de $(div\overline{A})_{min} \approx$ **(-0,13Addition/dpt-0,05) dpt/mm**

**11.** Verre de lunettes progressif avec au moins une surface progressive, moyennant quoi le verre de lunettes comprend au moins :

- une pièce de vision sur longue distance positionnée avec un point de référence éloigné permettant de voir de loin,
- une pièce de vision sur courte distance positionnée avec un point de référence proche permettant de voir de près,
- une zone progressive située entre la pièce de vision sur longue distance et la pièce de vue sur courte distance dans laquelle l'action du verre de lunettes s'amplifie d'une valeur appelée addition en fonction de la valeur au niveau du point de référence éloigné par rapport à la valeur au niveau du point de référence proche en suivant une ligne principale,
moyennant quoi
- le maximum global de la valeur $|div\overline{A}|$ de divergence d'un astigmatisme vectoriel $\overline{A}$ est situé en dehors de la zone de bonne vision du verre de lunettes, zone dans laquelle la valeur de l'astigmatisme vectoriel $|\overline{A}|$ est inférieure à 0,6 dpt et/ou
- la valeur $|rot\overline{A}|$ de rotation de l'astigmatisme vectoriel $\overline{A}$ au niveau de la pièce de vision sur courte distance et/ou au niveau de la pièce de vision sur longue distance ne dépasse pas une valeur maximale de $|rot\overline{A}|_{max}$ **= 0,25 Addition/dpt*dpt/mm** et
- moyennant quoi la valeur $|\overline{A}|$ de l'astigmatisme vectoriel $\overline{A}$ est égale à cette valeur et la direction de l'astigmatisme vectoriel $\overline{A}$ correspond au double de l'angle de position d'axe d'un astigmatisme en position d'utilisation du verre de lunettes progressif ou d'un astigmatisme de surface de la surface au moins une progressive du verre de lunettes progressif, la position d'utilisation étant définie à l'aide des paramètres suivants :
- distance pupillaire = 64,0 mm
- distance entre le vertex de la cornée et les verres = 13,0 mm
- inclinaison longitudinale = 7,0 degrés
- distance du foyer oculaire = 26,5 mm

**12.** Verre de lunettes progressif selon la revendication 11 pour lequel les coordonnées x de la position du maximum global de la valeur $|div\overline{A}|$ de divergence de l'astigmatisme vectoriel $\overline{A}$ sont supérieures à 6,0 mm et les coordonnées y sont inférieures à -8,5 mm et pour lequel x désigne l'axe horizontal et y l'axe vertical en position d'utilisation et le point zéro x=0, y=0 se trouve à quatre millimètres en dessous du point focal du verre de lunettes.

**13.** Verre de lunettes progressif selon l'une quelconque des revendications 11 ou 12 pour lequel, pour toutes les surfaces progressives d'une addition supérieure ou égale à 2,0˚dpt, tous les extrema de la valeur $|div\overline{A}|$ de divergence de

l'astigmatisme vectoriel $\overline{A}$ dépassant la valeur du facteur de multiplication de 0,1/mm de l'addition se trouvent en dehors de la zone y≥-9 mm du verre de lunettes.

14. Verre de lunettes progressif selon l'une quelconque des revendications 11 à 13 pour lequel la valeur $|rot\overline{A}|$ de rotation de l'astigmatisme vectoriel $\overline{A}$ , dans une coupe horizontale dans laquelle y=-14 mm, ne dépasse pas une valeur maximale de $|rot\overline{A}|_{max}$ = 0,115 Addition/dpt * dpt/mm , de préférence $|rot\overline{A}|_{max}$ ≈ 0,08 Addition/dpt *dpt/mm

15. Verre de lunettes progressif selon l'une quelconque des revendications 11 à 14 pour lequel la valeur $|rot\overline{A}|$ de rotation de l'astigmatisme vectoriel $\overline{A}$, dans une coupe horizontale dans laquelle y=+6 mm, ne dépasse pas une valeur maximale de $|rot\overline{A}|_{max}$ ≈ 0,115 Addition/dpt* dpt/mm, de préférence $|rot\overline{A}|_{max}$ ≈ 0,06 Addition/dpt*dpt/mm

16. Verre de lunettes progressif selon l'une quelconque des revendications 11 à 15 pour lequel, dans la pièce de vision sur longue distance, une coupe horizontale y=const. est réalisée entre y=3 mm et y=5 mm, coupe le long de laquelle la valeur $|rot\overline{A}|$ de rotation de l'astigmatisme vectoriel $\overline{A}$ augmente de manière uniforme par rapport à la ligne principale et part de l'extérieur pour atteindre des coordonnées $|x|$=16 mm.

17. Verre de lunettes progressif selon l'une quelconque des revendications 11 à 16 pour lequel la divergence $div\overline{A}$ de l'astigmatisme vectoriel $\overline{A}$, dans une coupe horizontale dans laquelle y=0 mm, ne dépasse pas une valeur maximale de $(div\overline{A})_{max}$ ≈ (0,11Addition/dpt+ 0,03) dpt/mm, de préférence $(div\overline{A})_{max}$ ≈ (0,08Addition/dpt + 0,03) dpt/mm

18. Verre de lunettes progressif selon l'une quelconque des revendications 11 à 17 pour lequel la divergence $div\overline{A}$ de l'astigmatisme vectoriel $\overline{A}$, dans une coupe horizontale dans laquelle y=0 mm, ne passe pas sous une valeur minimale de $(div\overline{A})_{min}$ ≈ (-0,07Addition/dpt - 0,11)dpt/mm, de préférence $(div\overline{A})_{min}$ ≈ (-0,05Addition/dpt-0,08) dpt/mm

19. Verre de lunettes progressif selon l'une quelconque des revendications 11 à 18 pour lequel la divergence $div\overline{A}$ de l'astigmatisme vectoriel $\overline{A}$, dans une coupe horizontale dans laquelle y=-14 mm, ne dépasse pas une valeur maximale de $(div\overline{A})_{max}$ ≈ (0,12Addition/dpt + 0,06) dpt/mm

20. Verre de lunettes progressif selon l'une quelconque des revendications 11 à 19 pour lequel la divergence $div\overline{A}$ de l'astigmatisme vectoriel $\overline{A}$, dans une coupe horizontale dans laquelle y=-14 mm, ne passe pas sous une valeur minimale de $(div\overline{A})_{min}$ ≈ (-0,13Addition/dpt - 0,05) dpt/mm

Fig. 1A

EP 1 676 167 B1

Fig. 1B

EP 1 676 167 B1

Fig. 1C

EP 1 676 167 B1

Fig. 2A

EP 1 676 167 B1

Fig. 2B

EP 1 676 167 B1

Fig. 2C

**Fig. 3A**

EP 1 676 167 B1

**Fig. 3B**

Fig. 3C

Fig. 4A

Fig. 4B

Fig. 4C

EP 1 676 167 B1

**Fig. 5A**

Fig. 5B

**Fig. 5C**

Fig. 6A

Fig. 6B

EP 1 676 167 B1

Fig. 6C

|Rot A| [dpt/mm]

**Fig. 7A**

|Rot A| [dpt/mm]

**Fig. 7B**

**Fig. 7C**

**Fig. 7D**

|Rot A| [dpt/mm]

**Fig. 8A**

|Rot A| [dpt/mm]

**Fig. 8B**

|Rot A| [dpt/mm]

0.5

0.4

0.3

0.2

0.1

x [mm]

-20    -10         10    20

**Fig. 8C**

|Rot A| [dpt/mm]

0.5

0.4

0.3

0.2

0.1

x [mm]

-20   -10        10   20

—— Add 1.0
— — Add 2.0
– – Add 2.5
········ Add 3.0
·—·— Add 3.5

**Fig. 8D**

Fig. 8E

Fig. 9A

**Fig. 9B**

**Fig. 9C**

**Fig. 9D**

**Fig. 9E**

**Fig. 10A**

**Fig. 10B**

**Fig. 10C**

**Fig. 10D**

Div A[dpt/mm]

| | Add 1.0 |
|---|---|
| — — | Add 2.0 |
| – – – | Add 2.5 |
| ········· | Add 3.0 |
| · – · · | Add 3.5 |

**Fig. 10E**

Div A[dpt/mm]

**Fig. 11A**

**Fig. 11B**

**Fig. 11C**

EP 1 676 167 B1

Div A[dpt/mm]

Add 1.0
Add 2.0
Add 2.5
Add 3.0
Add 3.5

x [mm]

**Fig. 11D**

Div A[dpt/mm]

Add 1.0
Add 2.0
Add 2.5
Add 3.0
Add 3.5

x [mm]

**Fig. 11E**

57

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4342234 C2

- WO 0181979 A

**In der Beschreibung aufgeführte Nicht-Patentliteratur**

- **Diepes, H.** Refraktionsbestimmung. Verlag Heinz Postenrieder, 1972, 322

- **Reiner, J.** Auge und Brille. Ferdinand Enke Verlag, 1987, 27